(19) Europäisches Patentamt
European Patent Office
Office européen des brevets

(11) **EP 2 732 541 B1**

(12) **EUROPÄISCHE PATENTSCHRIFT**

(45) Veröffentlichungstag und Bekanntmachung des Hinweises auf die Patenterteilung:
**12.08.2015 Patentblatt 2015/33**

(21) Anmeldenummer: **12756412.8**

(22) Anmeldetag: **24.08.2012**

(51) Int Cl.:
*H02M 3/335* (2006.01)     *H02M 1/00* (2007.01)

(86) Internationale Anmeldenummer:
**PCT/EP2012/066490**

(87) Internationale Veröffentlichungsnummer:
**WO 2013/030105 (07.03.2013 Gazette 2013/10)**

(54) **ANORDNUNG MIT POTENZIALGETRENNTER STROMVERSORGUNGSEINRICHTUNG**

ASSEMBLY HAVING A POTENTIAL-ISOLATED ELECTRICAL POWER SUPPLY DEVICE

SYSTÈME COMPRENANT UN DISPOSITIF D'ALIMENTATION EN COURANT À ISOLATION GALVANIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.08.2011 DE 102011081719**

(43) Veröffentlichungstag der Anmeldung:
**21.05.2014 Patentblatt 2014/21**

(73) Patentinhaber: **Siemens Aktiengesellschaft**
**80333 München (DE)**

(72) Erfinder:
• EUE, Wolfgang
 38162 Cremlingen (DE)
• OKYERE, Philip, Fosu
 38100 Braunschweig (DE)

(56) Entgegenhaltungen:
DE-A1- 3 501 052     DE-A1- 10 038 988
DE-C1- 3 514 567

**Beschreibung**

Die Erfindung bezieht sich auf eine Anordnung mit einer potenzialgetrennten Stromversorgungseinrichtung mit den Merkmalen gemäß dem Oberbegriff des Patentanspruchs 1, beispielsweise für den Einsatz in einer Eisenbahnanlage.

Bekannte potenzialgetrennte Stromversorgungseinrichtungen weisen einen Eingang zum Anlegen einer Eingangsspannung, einen vom Eingang potenzialgetrennten Ausgang zur Ausgabe einer Ausgangsspannung und einen Steueranschluss auf, an dem ein Steuersignal zum Erhöhen oder Erniedrigen der Ausgangsspannung angelegt werden kann. Mit einem Spannungsbewertungsmodul, das an den Ausgang der Stromversorgungseinrichtung angeschlossen wird, kann ein Rückmeldesignal gebildet werden, das die Spannungshöhe der Ausgangsspannung betrifft. Dieses Rückmeldesignal kann zur Ansteuerung der potenzialgetrennten Stromversorgungseinrichtung verwendet werden, um eine vorgegebene Spannungshöhe der Ausgangsspannung einzustellen.

DE-A1-3501052 offenbart eine potential getrennte Stromversorgungseinrichtung.

Der Erfindung liegt die Aufgabe zugrunde, eine Anordnung anzugeben, die besonders flexibel eingesetzt werden kann und dennoch den Einsatz toleranzbehafteter Komponenten erlaubt.

Diese Aufgabe wird erfindungsgemäß durch eine Anordnung gemäß Patentanspruch 1 gelöst. Vorteilhafte Ausgestaltungen der erfindungsgemäßen Anordnung sind in Unteransprüchen angegeben.

Danach ist erfindungsgemäß vorgesehen, dass die Steuereinrichtung geeignet ist, wahlweise eine von zumindest zwei unterschiedlichen Sollspannungshöhen am Ausgang der Stromversorgungseinrichtung einzustellen, das Spannungsbewertungsmodul derart ausgestaltet ist, dass es ein Rückmeldesignal an die Steuereinrichtung zurücksendet, mit dem das Über- oder Unterschreiten jeder der zumindest zwei unterschiedlichen Sollspannungshöhen am Ausgang der Stromversorgungseinrichtung jeweils durch einen Signalwechsel des Rückmeldesignals angezeigt wird, und die Steuereinrichtung geeignet ist, unter Berücksichtigung der Signalwechsel des Rückmeldesignals jedes der mindestens zwei unterschiedlichen Sollspannungshöhen am Ausgang der Stromversorgungseinrichtung einzustellen.

Ein wesentlicher Vorteil der erfindungsgemäßen Anordnung ist darin zu sehen, dass sich mit dieser wahlweise zwei oder mehr unterschiedliche Sollspannungshöhen am Ausgang der Stromversorgungseinrichtung einstellen lassen, ohne dass eine Rückmeldung der Höhe der Ausgangspannung als solche an die Steuereinrichtung erfolgen muss; denn die Steuereinrichtung kann allein anhand sollspannungsindividueller Signalwechsel (z. B. anhand sollspannungsindividueller binärer Pegelwechsel im Falle eines binären Rückmeldesignals oder anhand sollspannungsindividueller Signalflanken im Falle eines analogen Rückmeldesignals) die Sollspannungshöhe einstellen, indem sie für die jeweilige Sollspannung den zugehörigen sollspannungsindividuellen Signalwechsel auswertet.

Ein weiterer wesentlicher Vorteil der erfindungsgemäßen Anordnung ist darin zu sehen, dass eine sehr genaue Regelung der Ausgangsspannung auf die jeweilige Sollspannungshöhe erfolgen kann, weil für jede Sollspannungshöhe - wie bereits erwähnt - jeweils ein sollspannungsindividueller Signalwechsel, also ein sollspannungsindividueller binärer Pegelwechsel (logisch 1 auf logisch 0 oder ungekehrt) im Falle eines binären Rückmeldesignals oder eine sollspannungsindividuelle Signalflanke im Falle eines analogen Rückmeldesignals, zur Auswertung zur Verfügung steht.

Aufgrund dieser Eigenschaften eignet sich die erfindungsgemäße Anordnung beispielsweise sehr gut für einen Einsatz in einer Eisenbahnsignaleinrichtung mit einem optischen Signalgeber, der wahlweise in einem Tagbetrieb oder Nachtbetrieb betrieben werden soll.

Als Rückkoppelsignal kann - wie erwähnt - ein binäres Rückkoppelsignal verwendet werden, das zwei unterschiedliche logische Signalpegel aufweist; in diesem Fall kann die Steuereinrichtung das Auftreten der sollspannungsindividuellen Pegelwechsel zur Steuerung der Stromversorgungseinrichtung heranziehen. Alternativ kann als Rückkoppelsignal ein analoges Signal verwendet werden, das bei jeder der Sollspannungshöhen (Arbeitspunkte) jeweils einen linearen oder zumindest annähernd linearen Signalflankenverlauf aufweist; in diesem Fall kann die Steuereinrichtung zur Steuerung der Stromversorgungseinrichtung das Auftreten der Signalflanken als solches heranziehen und/oder die sollspannungsindividuellen Signalflankenbereiche im Detail auswerten, indem sie beispielsweise die relative Lage in der jeweiligen Signalflanke als Maß zur Bestimmung der Abweichung von der jeweiligen Sollspannungshöhe heranzieht. Dabei ist eine sehr genaue quantitative Bestimmung der Abweichung von der jeweiligen Sollspannungshöhe möglich, weil für jede Sollspannung eine sollspannungsindividuelle, und damit sehr steile Signalflanke ausgewertet werden kann.

Als besonders vorteilhaft wird es angesehen, wenn das Spannungsbewertungsmodul eine mit der Ausgangsspannung der Stromversorgungseinrichtung beaufschlagte Umschalteinrichtung aufweist, deren Schaltstellung von der Höhe der Ausgangsspannung der Stromversorgungseinrichtung abhängt, und die Umschalteinrichtung zumindest einen Hilfsschwellenwertschalter umfasst, dessen Schaltschwelle zwischen jeweils zwei benachbarten der zumindest zwei unterschiedlichen Sollspannungshöhen liegt.

Gemäß einer besonders bevorzugten Ausgestaltung ist vorgesehen, dass das Spannungsbewertungsmodul einen mit der Ausgangsspannung der Stromversorgungseinrichtung beaufschlagten Hauptschwellenwertschalter aufweist, dessen Schaltschwelle von der Umschalteinrichtung wahlweise auf eine oder eine andere der zumindest zwei unterschiedlichen Sollspannungshöhen umgeschaltet werden kann, und das Ausgangssignal des Hauptschwellenwertschalters - unverarbeitet oder in weiterverarbeiteter Form - als binäres Rückmeldesignal an die Steuereinrichtung zurückgesendet wird.

Gemäß einer anderen besonders bevorzugten Ausgestaltung ist vorgesehen, dass das Spannungsbewertungsmodul einen analogen Verstärker aufweist, der mit einer zu der Ausgangsspannung der Stromversorgungseinrichtung proportionalen Spannung beaufschlagt ist und dessen Arbeitspunkt von der Umschalteinrichtung wahlweise auf eine oder eine andere der zumindest zwei unterschiedlichen Sollspannungshöhen umgeschaltet werden kann, und das Ausgangssignal des Verstärkers - unverarbeitet oder in weiterverarbeiteter Form - als analoges Rückmeldesignal an die Steuereinrichtung zurückgesendet wird.

Bei dem analogen Verstärker handelt es sich bevorzugt um einen Differenzverstärker, an dessen einem Eingangsanschluss eine zu der Ausgangsspannung proportionale Spannung und an dessen anderem Eingangsanschluss eine zu der Sollspannungshöhe proportionale Spannung anliegt.

Gemäß einer dritten besonders bevorzugten Ausgestaltung ist vorgesehen, dass das Spannungsbewertungsmodul einen von der Umschalteinrichtung gesteuerten Multiplexer aufweist, der abhängig vom Signal der Umschalteinrichtung jeweils eines der eingangsseitig an ihm anliegenden Eingangssignale - unverarbeitet oder in weiterverarbeiteter Form - als Rückmeldesignal an die Steuereinrichtung zurücksendet.

Bei der letztgenannten Variante wird es als vorteilhaft angesehen, wenn das Spannungsbewertungsmodul zumindest zwei mit der Ausgangsspannung der Stromversorgungseinrichtung beaufschlagte Hauptschwellenwertschalter aufweist, deren Schaltschwellen auf unterschiedlichen Sollspannungshöhen liegen, und der Multiplexer jeweils eines der Ausgangssignale der Hauptschwellenwertschalter - unverarbeitet oder in weiterverarbeiteter Form - als binäres Rückmeldesignal an die Steuereinrichtung zurücksendet.

Alternativ wird als vorteilhaft angesehen, wenn das Spannungsbewertungsmodul zumindest zwei analoge Verstärker aufweist, die jeweils mit einer zu der Ausgangsspannung der Stromversorgungseinrichtung proportionalen Spannung beaufschlagt sind und deren Arbeitspunkte auf unterschiedlichen Sollspannungshöhen liegen, und der Multiplexer jeweils eines der Ausgangssignale der Verstärker - unverarbeitet oder in weiterverarbeiteter Form - als analoges Rückmeldesignal an die Steuereinrichtung zurücksendet.

Bei einer anderen, ebenfalls als sehr vorteilhaft angesehenen Variante ist vorgesehen, dass das Spannungsbewertungsmodul zumindest zwei mit der Ausgangsspannung der Stromversorgungseinrichtung beaufschlagte Schwellenwertschalter aufweist, deren Schaltschwellen auf unterschiedlichen Sollspannungshöhen liegen, und die Ausgänge der Schwellenwertschalter an ein XOR-Glied angeschlossen sind, und das Ausgangssignal des XOR-Glieds - unverarbeitet oder in weiterverarbeiteter Form - als binäres Rückmeldesignal an die Steuereinrichtung zurückgesendet wird.

Bei einer noch anderen, ebenfalls als sehr vorteilhaft angesehenen Variante ist vorgesehen, dass das Spannungsbewertungsmodul zumindest zwei analoge Verstärker aufweist, die jeweils mit einer zu der Ausgangsspannung der Stromversorgungseinrichtung proportionalen Spannung beaufschlagt sind und deren Arbeitspunkte auf unterschiedlichen Sollspannungshöhen liegen, und die Ausgänge der analogen Verstärker derartig miteinander verknüpft sind, dass der jeweils für den nächst höheren Arbeitspunkt eingestellte analoge Verstärker eine gegenüber dem vorherigen analogen Verstärker invertierte Wirkung auf das Ergebnissignal hervorbringt, und das Ergebnissignal - unverarbeitet oder in weiterverarbeiteter Form - als analoges Rückmeldesignal an die Steuereinrichtung zurückgesendet wird.

Zwischen die Steuereinrichtung und das Spannungsbewertungsmodul wird zur Potenzialtrennung vorzugsweise eine Potenzialtrennungskomponente vorgesehen, die das analoge oder binäre Rückmeldesignal des Spannungsbewertungsmoduls an die Steuereinrichtung überträgt. Bei der Potenzialtrennungskomponente kann es sich beispielsweise um einen Trenntrafo, eine Funkschnittstelle oder einen Optokoppler handeln. Unter einem Optopkoppler wird dabei jedwede Komponente verstanden, bei der eine Potenzialtrennung durch eine optische Schnittstelle erfolgt, also jede Komponente mit einem optischen Sender und einem optischen Empfänger.

Vorzugsweise weist die Steuereinrichtung einen Steuereingang auf, der das Einspeisen eines Auswahlwahlsignals zur Auswahl eines der zumindest zwei unterschiedlichen Sollspannungshöhen ermöglicht.

Als vorteilhaft wird es angesehen, wenn die Steuereinrichtung zumindest ein Verzögerungsglied aufweist, das im Falle eines Umstellens des Auswahlsignals am Steuereingang der Steuereinrichtung die Steuereinrichtung für eine vorgegebene Zeitspanne von einem vom Rückmeldesignal abhängigen Regelbetrieb in einen vom Rückmeldesignal unabhängigen Steuerbetrieb umschaltet, wobei die Steuereinrichtung im Steuerbetrieb - unabhängig vom Rückmeldesignal - am Steueranschluss der Stromversorgungseinrichtung ein Steuersignal zum Erhöhen der Ausgangsspannung anlegt, wenn das umgestellte Auswahlsignal im Vergleich zum vorherigen eine Erhöhung der Ausgangsspannung vorsieht, oder ein Steuersignal zum Erniedrigen der Ausgangsspannung anlegt, wenn das umgestellte Auswahlsignal im Vergleich zum vorherigen eine Erniedrigung der Ausgangsspannung vorsieht, und wobei die Steuereinrichtung im Regelbetrieb das Steuersignal in Abhängigkeit vom Rückmeldesignal erzeugt.

Die Erfindung bezieht sich außerdem auf eine Eisenbahnsignaleinrichtung mit einer Anordnung, wie sie oben beschrieben ist, und einem optischen Signalgeber, der an den Ausgang der Anordnung angeschlossen ist und der wahlweise in einem Tagbetrieb oder Nachtbetrieb betrieben werden kann. Vorzugsweise entspricht eine der zumindest zwei unterschiedlichen Sollspannungshöhen der Anordnung der Sollspannung am Signalgeber für den Tagbetrieb und eine andere der zumindest zwei unterschiedlichen Sollspannungshöhen der Anordnung der Sollspannung am Signalgeber für den Nachtbetrieb.

Die Erfindung bezieht sich außerdem auf ein Verfahren zum Erzeugen einer Ausgangsspannung an einem Ausgang einer potenzialgetrennten Stromversorgungseinrichtung, wobei an einem Eingang der Stromversorgungseinrichtung eine Eingangsspannung angelegt wird und an einem Steueranschluss der Stromversorgungseinrichtung mit einer Steuereinrichtung ein Steuersignal zum Erhöhen oder Erniedrigen der Ausgangsspannung der Stromversorgungseinrichtung angelegt wird.

Erfindungsgemäß ist vorgesehen, dass wahlweise eine von zumindest zwei unterschiedlichen Sollspannungshöhen am Ausgang der Stromversorgungseinrichtung eingestellt wird, wobei ein Rückmeldesignal erzeugt und an die Steuereinrichtung zurückgesendet wird, mit dem das Über- oder Unterschreiten der zumindest zwei unterschiedlichen Sollspannungshöhen am Ausgang der Stromversorgungseinrichtung jeweils durch einen Signalwechsel des Rückmeldesignals angezeigt wird, und wobei die Signalwechsel des Rückmeldesignals zum Einstellen der Ausgangsspannung der Stromversorgungseinrichtung herangezogen werden.

Bezüglich der Vorteile des erfindungsgemäßen Verfahrens sei auf die obigen Ausführungen im Zusammenhang mit der erfindungsgemäßen Anordnung verwiesen, da die Vorteile des erfindungsgemäßen Verfahrens denen der erfindungsgemäßen Anordnung im Wesentlichen entsprechen.

Die Erfindung wird nachfolgend anhand von Ausführungsbeispielen näher erläutert; dabei zeigen beispielhaft:

Figur 1 ein Ausführungsbeispiel für eine erfindungsgemäße Anordnung,

Figur 2 die Schaltkennlinie der Anordnung gemäß Figur 1,

Figur 3 ein Ausführungsbeispiel für eine Steuereinrichtung für die Anordnung gemäß Figur 1,

Figur 4 ein weiteres Ausführungsbeispiel für eine Steuereinrichtung für die Anordnung gemäß Figur 1,

Figur 5 ein zweites Ausführungsbeispiel für eine erfindungsgemäße Anordnung,

Figur 6 die Schaltkennlinie der Anordnung gemäß Figur 5,

Figur 7 ein Ausführungsbeispiel für eine Steuereinrichtung für die Anordnung gemäß Figur 5,

Figur 8 ein drittes Ausführungsbeispiel für eine erfindungsgemäße Anordnung,

Figur 9 die Schaltkennlinie der Anordnung gemäß Figur 8,

Figur 10 ein viertes Ausführungsbeispiel für eine erfindungsgemäße Anordnung,

Figur 11 die Schaltkennlinie der Anordnung gemäß Figur 10,

Figur 12 ein fünftes Ausführungsbeispiel für eine erfindungsgemäße Anordnung,

Figur 13 ein sechstes Ausführungsbeispiel für eine erfindungsgemäße Anordnung,

Figur 14 die Schaltkennlinie der Anordnung gemäß Figur 13,

Figur 15 ein siebentes Ausführungsbeispiel für eine erfindungsgemäße Anordnung,

Figur 16 die Schaltkennlinie der Anordnung gemäß Figur 15,

Figur 17 ein weiteres Ausführungsbeispiel für eine Steuereinrichtung für eine erfindungsgemäße Anordnung und

Figur 18 ein achtes Ausführungsbeispiel für eine erfindungsgemäße Anordnung.

In den Figuren werden der Übersicht halber für identische oder vergleichbare Komponenten stets dieselben Bezugszeichen verwendet.

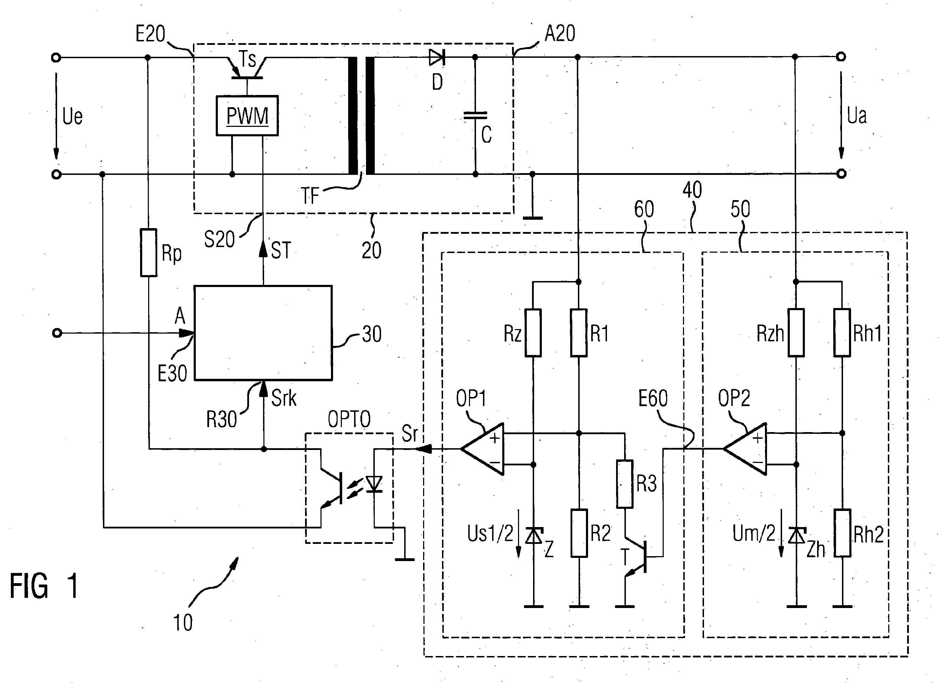

In der Figur 1 erkennt man eine Anordnung 10 mit einer potenzialgetrennten Stromversorgungseinrichtung 20, an deren Eingang E20 eine Eingangsspannung Ue angelegt werden kann. Die Stromversorgungseinrichtung 20 weist eingangsseitig einen Schalttransistor Ts auf, der von einer Pulsweitenmodulationseinrichtung PWM angesteuert wird. Dem Schalttransistor Ts nachgeordnet ist ein Transformator TF, der eine Spannungsumsetzung und eine Potenzialtrennung zwischen dem Eingang E20 der Stromversorgungseinrichtung 20 und dem Ausgang A20 hervorruft. Auf der Ausgangsseite des Transformators TF sind eine Diode D sowie ein Kondensator C angeschlossen. Der Kondensator C liegt zu dem Ausgang A20 parallel, so dass die an dem Kondensator C abfallende Spannung die Ausgangsspannung Ua der Stromversorgungseinrichtung 20 bildet.

Zur Steuerung der Pulsweitenmodulationseinrichtung PWM weist die Stromversorgungseinrichtung 20 einen Steueranschluss S20 auf, an den eine Steuereinrichtung 30 angeschlossen ist. Im Nachfolgenden wird beispielhaft davon ausgegangen, dass die Steuereinrichtung 30 mit Hilfe eines Steuersignals ST, das am Steueranschluss S20 in die Stromversorgungseinrichtung 20 und damit in die Pulsweitenmodulationseinrichtung PWM eingespeist wird, die Arbeitsweise der Stromversorgungseinrichtung 20 und damit die Ausgangsspannung Ua am Ausgang A20 gesteuert beziehungsweise geregelt werden kann. Dabei wird - ebenfalls nur beispielhaft - davon ausgegangen, dass bei Anlegen eines Steuersignals ST mit einem hohen Signalpegel die Pulsweitenmodulationseinrichtung PWM den Schalttransistor Ts derart ansteuern wird, dass sich die Ausgangsspannung Ua am Ausgang A20 erhöhen wird. Im Falle eines Steuersignals ST mit einem niedrigen Signalpegel wird die Pulsweitenmodulationseinrichtung PWM mittels des Schalttransistors Ts für eine Erniedrigung der Ausgangsspannung Ua am Ausgang A20 sorgen. Die hier vorgenommene Zuordnung der Signalpegel zum Erhöhen oder Erniedrigen der Ausgangsspannung Ua ist nur beispielhaft zu verstehen; die Pulsweitenmodulationseinrichtung PWM könnte auch umgekehrt arbeiten und bei Anliegen eines Steuersignals ST mit einem niedrigen Signalpegel die Ausgangsspannung Ua erhöhen und bei Anliegen eines Steuersignals ST mit einem hohen Signalpegel die Ausgangsspannung Ua erniedrigen.

Wie fachsprachlich üblich, wird im Nachfolgenden ein Steuersignal mit einem hohen Signalpegel auch High-Signal und ein Steuersignal mit einem niedrigen Spannungspegel auch Low-Signal genannt.

In der Figur 1 lässt sich erkennen, dass an den Ausgang A20 der Stromversorgungseinrichtung 20 ein Spannungsbewertungsmodul 40 angeschlossen ist, das über einen Optokoppler OPTO mit der Steuereinrichtung 30 zusammenwirkt. So erzeugt das Spannungsbewertungsmodul 40 ein Rückmeldesignal Sr, das in den Optokoppler OPTO eingespeist wird und an einem Rückmeldeeingang R30 der Steuereinrichtung 30 zu einem rückgekoppelten Rückmeldesignal Srk führt.

Bei dem Ausführungsbeispiel gemäß Figur 1 wird beispielhaft davon ausgegangen, dass bei einem Rückmeldesignal Sr mit einem hohen Signalpegel der Optokoppler OPTO durchschalten wird, so dass der Signalpegel am Eingang R30 der Steuereinrichtung 30 niedrig sein wird, weil der Transistor des Optokopplers OPTO durchschalten wird. In entsprechender Weise wird bei einem Rückmeldesignal Sr mit einem kleinen Signalpegel der Optokoppler OPTO den Transistor nicht durchschalten, so dass sich am Rückmeldeeingang R30 ein rückgekoppeltes Rückmeldesignal Srk mit einem hohen Spannungspegel bilden wird. Aufgrund der Beschaltung des Optokopplers OPTO kommt es also zu einer Invertierung der Signalpegel durch den Optokoppler OPTO, wobei diese Ausführungsform auch hier nur beispielhaft zu verstehen ist.

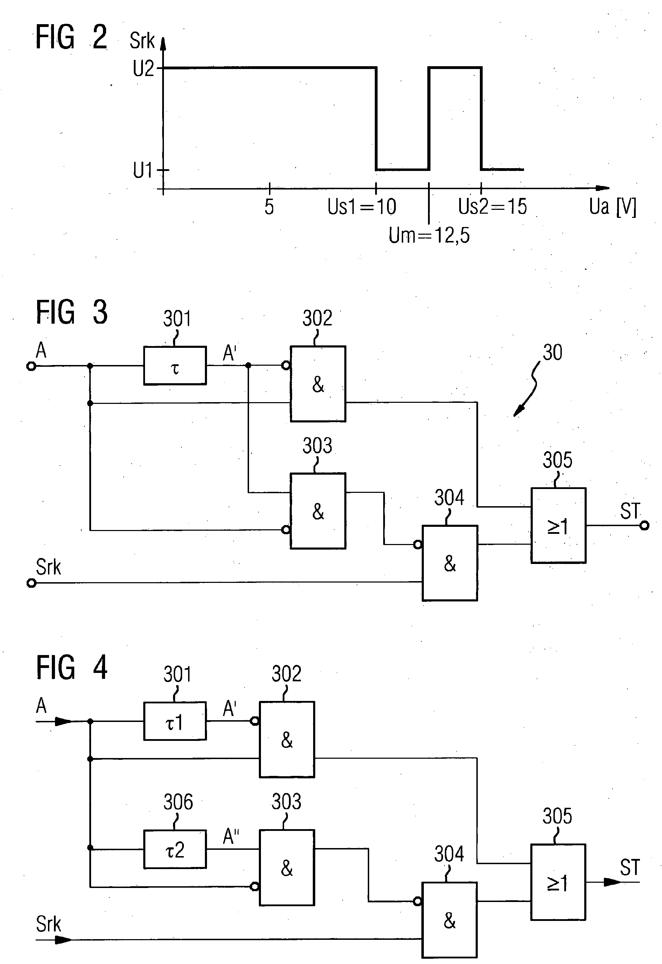

Die Figur 1 zeigt darüber hinaus, dass die Steuereinrichtung 30 einen Steuersignaleingang E30 aufweist, an dem ein Auswahlsignal A eingespeist werden kann. Wie weiter unten noch näher im Detail erläutert werden wird, lässt sich durch ein Einspeisen eines Auswahlsignals A die Anordnung 10 hinsichtlich der am Ausgang A20 auftretenden Ausgangsspannung Ua umschalten. So kann bei dem Ausführungsbeispiel gemäß Figur 1 zwischen einer ersten Sollspannungshöhe Us1 und einer zweiten Sollspannungshöhe Us2 umgeschaltet werden, wie insbesondere im Zusammenhang mit der Figur 2 noch erläutert wird.

Die Figur 1 zeigt außerdem den Aufbau des Spannungsbewertungsmoduls 40 näher im Detail. Es lässt sich eine Umschalteinrichtung 50 erkennen, die an den Ausgang A20 der Stromversorgungseinrichtung 20 angeschlossen ist. Die Umschalteinrichtung 50 weist zwei Widerstände Rh1 und Rh2 auf, die einen Hilfsspannungsteiler bilden. Die an dem Hilfsspannungsteiler abfallende Spannung wird in einen Pluseingang eines Hilfsschwellenwertschalters OP2 eingespeist, bei dem es sich beispielsweise um einen üblichen Operationsverstärker handeln kann.

Der Minuseingang des Hilfsschwellenwertschalters OP2 beziehungsweise des Operationsverstärkers OP2 ist mit der Spannung beaufschlagt, die an einer Hilfszenerdiode oder einem Hilfsreferenzelement Zh abfällt. Die an der Hilfszenerdiode Zh abfallende Spannung ist in der Figur 1 mit dem Bezugszeichen Um/2 bezeichnet. Die Hilfszenerdiode Zh legt, wie weiter unten noch näher erläutert wird, eine Umschaltspannung Um fest, bei der die Umschalteinrichtung 50 umschaltet.

Der Ausgang des Hilfsschwellenwertschalters OP2 ist an einen Eingang E60 eines Hauptschwellenwertschalters 60 angeschlossen, der eingangsseitig mit einen Transistor T in Verbindung steht. Der Hauptschwellenwertschalter 60 weist neben dem Transistor drei Widerstände R1, R2 und R3, eine Zenerdiode Z, einen Vorwiderstand Rz für die Zenerdiode Z und einen Operationsverstärker OP1 auf.

Die beiden Widerstände R1 und R2 bilden einen Spannungsteiler, wobei die am Spannungsteiler abfallende Spannung von dem Schaltzustand des Transistors T abhängt. Ist der Transistor T nicht durchgeschaltet, so kann durch den Widerstand R3 kein Strom fließen, so dass die Spannung am Pluseingang des Operationsverstärkers OP1 allein durch die beiden Widerstände R1 und R2 bestimmt ist. Ist hingegen der Transistor T durchgeschaltet, so bilden die beiden Widerstände R2 und R3 eine Parallelschaltung, so dass sich das Teilerverhältnis des Spannungsteilers verändert. Dies wird nachfolgend noch anhand von Zahlenbeispielen näher dargestellt.

Der Minuseingang des Operationsverstärkers OP1 ist mit der Zenerdiode oder dem Referenzelement Z verbunden, die mit dem Vorwiderstand Rz an die Ausgangsspannung Ua am Ausgang A20 angeschlossen ist.

Der Operationsverstärker OP1 erzeugt an seinem Ausgang in Abhängigkeit von der Spannungsdifferenz zwischen dem Pluseingang und dem Minuseingang ein binäres Ausgangssignal, das als Rückmeldesignal Sr in den Optokoppler OPTO eingespeist wird.

Wie bereits erwähnt, ist die Anordnung 10 in der Lage, am Ausgang A20 eine Ausgangsspannung Ua zu erzeugen, die entweder eine erste Sollspannungshöhe Us1 oder eine zweite Sollspannungshöhe Us2 aufweist. Die Funktionsweise der Anordnung soll nun näher erläutert werden, wobei beispielhaft davon ausgegangen wird, dass die erste Sollspannungshöhe Us1 10 Volt und die zweite Sollspannungshöhe Us2 15 Volt beträgt. Die Umschaltspannung Um, bei der die Umschalteinrichtung 50 den Hauptschwellenwertschalter 60 umschaltet, soll bei diesem Ausführungsbeispiel Um = 12,5 V betragen. Die genannten Zahlenbeispiele sind selbstverständlich nur beispielhaft zu verstehen. Darüber hinaus wird davon ausgegangen, dass für die Dimensionierung der Komponenten der Umschalteinrichtung 50 und des Hauptschwellenwertschalters 60 folgende Beziehungen gelten:

$$Rh1 \ = \ Rh2$$

$$R1 \ = \ R2 \ = \ R3$$

Die an der Zenerdiode Z abfallende Spannung soll die Hälfte der ersten Sollspannungshöhe Us1, also Us1/2 = 5V betragen.

1. Regelbetrieb der Steuereinrichtung 30 bei einer Ausgangsspannung Ua=Us41=10V:

Nachfolgend wird erläutert, wie die Anordnung 10 gemäß Figur 1 arbeitet, wenn die Steuereinrichtung 30 in einem Regelbetrieb eine Ausgangsspannung Ua erzeugen will, die der ersten Sollspannungshöhe Us1 = 10 V entspricht. Wie bereits erwähnt, wird die Steuereinrichtung 30 in Abhängigkeit von dem Rückmeldesignal Sr beziehungsweise von dem Signalpegel des rückgekoppelten Rückmeldesignals Srk ein Steuersignal ST erzeugen, mit dem die Pulsweitenmodulationseinrichtung PWM derart angesteuert wird, dass die Ausgangsspannung Ua steigt oder sinkt.

Wird nun aufgrund der Ansteuerung der Pulsweitenmodulationseinrichtung PWM die Ausgangsspannung Ua die erste Sollspannungshöhe Us1 = 10 V überschreiten, so wird der Operationsverstärker OP1 des Hauptschwellenwertschalters 60 durchschalten und ein Ausgangssignal mit einem hohen Signalpegel erzeugen, so dass der Optokoppler OPTO durchgeschaltet wird und der Signalpegel des rückgekoppelten Rückmeldesignals Srk sinkt. In diesem Falle wird die Steuereinrichtung 30 ein Steuersignal ST erzeugen, das einen niedrigen Signalpegel aufweist, und somit der Stromversorgungseinrichtung 20 mitteilen, dass die Ausgangsspannung Ua am Ausgang A20 zu hoch wird. Wie bereits erwähnt, wird bei Anliegen eines Steuersignals ST mit einem niedrigen Signalpegel die Pulsweitenmodulationseinrichtung PWM die Ansteuerung des Schalttransistors Ts derart vornehmen, dass die Ausgangsspannung Ua am Ausgang A20 wieder sinkt.

Das Umschalten des Operationsverstärkers OP1 erfolgt bei dem Ausführungsbeispiel gemäß Figur 1 deshalb, weil der Transistor T bei einer Ausgangsspannung Ua, die zwischen der ersten Sollspannungshöhe Us1 und der Umschaltspannung Um liegt, noch nicht durchschaltet, so dass der Widerstand R3 inaktiv ist und der Spannungsteiler am Pluseingang des Operationsverstärker OP1 ausschließlich durch die Widerstände R1 und R2 bestimmt wird. Wie bereits erwähnt, sind die beiden Widerstände R1 und R2 hier gleich groß, so dass bei einem Überschreiten der ersten Sollspannungshöhe Us1 die Spannung am Pluseingang des Operationsverstärkers OP1 größer wird als die Spannung an der Zenerdiode Z, deren Zenerdiodenspannung die Hälfte der ersten Sollspannungshöhe Us1, also Us1/2 = 5 V betragen soll.

Sinkt aufgrund der entsprechenden Ansteuerung der Pulsweitenmodulationseinrichtung PWM im Weiteren die Ausgangsspannung Ua unter die erste Sollspannungshöhe Us1, so wird die Spannung am Spannungsteiler R1/R2 einen Spannungswert von 5 V unterschreiten, so dass der Operationsverstärker OP1 ein Ausgangssignal beziehungsweise Rückmeldesignal Sr mit einem niedrigen Signalpegel erzeugt. Dieser niedrige Signalpegel wird nicht ausreichen, den Optokoppler OPTO durchzuschalten, so dass der Transistor T des Optokopplers OPTO geöffnet wird. Demgemäß wird das Potenzial am Rückmeldeeingang R30 der Steuereinrichtung 30 ansteigen und einen hohen Spannungspegel, nämlich den Spannungspegel der Eingangsspannung Ue annehmen. In diesem Fall weiß die Steuereinrichtung 30, dass die Ausgangsspannung Ua am Ausgang A20 die erste Sollspannungshöhe Us1 = 10 V unterschritten hat, so dass sie ausgangsseitig ein Steuersignal ST mit einem hohen Spannungspegel erzeugen wird. Durch ein Steuersignal ST mit einem hohen Spannungspegel teilt die Steuereinrichtung 30 der Pulsweitenmodulationseinrichtung PWM mit, dass die Ausgangsspannung Ua zu niedrig ist und wieder erhöht werden soll.

In der genannten Weise kann die Steuereinrichtung 30 die Stromversorgungseinrichtung 20 derart regeln, dass am Ausgang A20 eine Ausgangsspannung Ua mit Ua = Us1 = 10 V erzeugt wird. Die Steuereinrichtung 30 regelt dabei die Arbeitsweise der Stromversorgungseinrichtung 20 beziehungsweise die der Pulsweitenmodulationseinrichtung PWM ausschließlich anhand der Signalwechsel, die über den Optokoppler OPTO übertragen werden, also anhand des binären rückgekoppelten Rückmeldesignals Srk bzw. des binären Ausgangssignals des Operationsverstärkers OP1.

2. Regelbetrieb der Steuereinrichtung 30 bei einer Ausgangsspannung Ua = Us2:

In entsprechender Weise arbeitet die Steuereinrichtung 30, wenn am Ausgang A20 eine Ausgangsspannung Ua = Us2 = 15 V erzeugt werden soll. In diesem Fall arbeitet jedoch das Spannungsbewertungsmodul 40 anders, weil nämlich die Umschalteinrichtung 50 bei einer Ausgangsspannung Ua = 12,5 V seinen Hilfsschwellenwertschalter OP2 umschalten und am Eingang E60 des Hauptschwellenwertschalters 60 eine Spannung erzeugen wird, mit der der Transistor T des Hauptschwellenwertschalters 60 durchgeschaltet wird. Durch das Durchschalten des Transistors T wird der Widerstand R3 parallel zu dem Widerstand R2 geschaltet, so dass sich das Teilerverhältnis des Spannungsteilers am Pluseingang des Operationsverstärkers OP1 ändert. Während bei ausgeschaltetem Transistor T das Teilerverhältnis 50 Prozent betrug, so beträgt das Teilerverhältnis nun nur noch 33 Prozent. Dies bedeutet, dass bei Anliegen einer Ausgangsspannung Ua in Höhe von 15 V am Pluseingang des Operationsverstärkers OP1 eine Spannung von 5 V anliegen wird, die der Zenerdiodenspannung der Zenerdiode Z entspricht.

Der Operationsverstärker OP1 schaltet nunmehr das binäre Rückmeldesignal Sr um, wenn die Ausgangsspannung Ua die zweite Sollspannungshöhe Us2 = 15 V über- oder unterschreitet. Kommt es zu einem Überschreiten der zweiten Sollspannungshöhe Us2, so wird das Ausgangssignal des Operationsverstärkers OP1 einen hohen Signalpegel annehmen, so dass der Transistor T des Optokopplers OPTO durchgeschaltet wird und am Rückmeldeeingang R30 der Steuereinrichtung 30 ein rückgekoppeltes Rückmeldesignal Srk mit einem niedrigen Signalpegel gebildet wird. Wie bereits erwähnt, erkennt die Steuereinrichtung 30 anhand eines niedrigen Signalpegels, dass die Ausgangsspannung Ua größer als die jeweilige Sollspannungshöhe, hier also größer als die zweite Sollspannungshöhe Us2 ist, so dass über ein entsprechendes Steuersignal ST eine Reduktion der Ausgangsspannung Ua durch die Stromversorgungseinrichtung 20 gefordert wird.

Unterschreitet hingegen die Ausgangsspannung Ua die zweite Sollspannungshöhe Us2 = 15 V, so wird die Spannung am Pluseingang des Operationsverstärkers OP1 eine Spannung von 5 V unterschreiten, so dass das Ausgangssignal des Operationsverstärkers OP1 nicht mehr ausreicht, den Optokoppler OPTO durchzuschalten. Das am Rückmeldeeingang R30 entstehende rückgekoppelte Rückmeldesignal Srk nimmt damit einen hohen Signalpegel an, so dass die Steuereinrichtung 30 weiß, dass die Ausgangsspannung Ua zu klein ist und ein Steuersignal ST mit einem hohen Signalpegel zum Erhöhen der Ausgangsspannung Ua erzeugt werden muss.

Die Steuereinrichtung 30 regelt die Stromversorgungseinrichtung 20 also auch hier anhand des Signal- bzw. Pegelwechsels eines binären Rückmeldesignals.

Das Umschalten des rückgekoppelten Rückmeldesignals Srk am Rückmeldeeingang R30 der Steuereinrichtung 30 ist beispielhaft in der Figur 2 in Abhängigkeit von der Ausgangsspannung Ua am Ausgang A20 dargestellt. Es lässt sich erkennen, dass bei einer Ausgangsspannung Ua = 10 V, also bei einer Ausgangsspannung, die der ersten Sollspannungshöhe Us1 entspricht, ein Signalwechsel auftritt. Überschreitet die Ausgangsspannung Ua die erste Sollspannungshöhe Us1, so wird das rückgekoppelte Rückmeldesignal Srk einen niedrigen Signalpegel U1 annehmen. Unterschreitet hingegen die Ausgangsspannung Ua die erste Sollspannungshöhe Us1, so wird das Rückmeldesignal Srk seinen Signalpegel wechseln und einen hohen Signalpegel U2 annehmen. Durch das Auswerten des Signalwechsels kann die Steuereinrichtung 30 also feststellen, dass die Ausgangsspannung Ua die erste Sollspannungshöhe Us1 über- oder unterschreitet und die Stromversorgungseinrichtung 20 entsprechend ansteuern, wie dies oben erläutert worden ist.

In entsprechender Weise arbeitet die Steuereinrichtung 30 im Bereich der zweiten Sollspannungshöhe Us2. Überschreitet die Ausgangsspannung Ua die zweite Sollspannungshöhe Us2 = 15 V, so wird das Rückmeldesignal Srk einen niedrigen Signalpegel U1 annehmen, wohingegen bei einem Unterschreiten der Sollspannungshöhe Us2 ein hoher Signalpegel U2 auftreten wird. Auch anhand dieses Signalwechsels im Bereich der Ausgangsspannung Ua = 15 V kann die Steuereinrichtung 30 also feststellen, wie die Pulsweitenmodulationseinrichtung PWM angesteuert werden muss.

Die Figur 2 zeigt darüber hinaus, dass bei Über- oder Unterschreiten der Umschaltspannung Um = 12,5 V die Umschalteinrichtung 50 das beschriebene Umschalten des Transistors T des Hauptschwellenwertschalters 60 vornehmen wird, womit die Arbeitsweise des Operationsverstärkers OP1 mittelbar verändert wird, wie dies bereits im Detail beschrieben worden ist. Bei dem Ausführungsbeispiel gemäß Figur 2 kann die Steuereinrichtung 30 sowohl für die erste Sollspannungshöhe Us1 als auch für die zweite Sollspannungshöhe Us2 feststellen, ob diese über- oder unterschritten wird, weil nämlich im Falle eines Unterschreitens der jeweiligen Sollspannungshöhe Us1 und Us2 ein Rückmeldesignal Srk mit einem hohen Signalpegel U2 und bei Überschreiten der jeweiligen Sollspannungshöhe Us1 und Us2 ein Rückmeldesignal Srk mit einem niedrigen Signalpegel U1 auftritt.

3. Steuerbetrieb der Steuereinrichtung 30 zum Umschalten der Sollspannungshöhen:

Wie bereits erläutert, kann die Steuereinrichtung 30 in einem Regelbetrieb die Ausgangsspannung Ua wahlweise auf eine erste Sollspannungshöhe Us1 = 10 V oder eine zweite Sollspannungshöhe Us2 = 15 V regeln. Nachfolgend soll erläutert werden, wie mit der Steuereinrichtung 30 ein Umschalten der Sollspannungshöhe durchgeführt werden kann.

Zum Umschalten der Sollspannungshöhe kann an den Steuereingang E30 der Steuereinrichtung 30 ein Auswahlsignal A angelegt werden, mit dem die erste Sollspannungshöhe Us1 oder die zweite Sollspannungshöhe Us2 ausgewählt wird. Nachfolgend wird beispielhaft davon ausgegangen, dass durch Anlegen eines t Auswahlsignals A mit einer logischen 0 die erste Sollspannungshöhe Us1 und durch Anlegen einer logischen 1 die zweite Sollspannungshöhe Us2 ausgewählt wird.

Ein Ausführungsbeispiel für den Aufbau der Steuereinrichtung 30 gemäß Figur 1 ist beispielhaft in der Figur 3 gezeigt. Man erkennt ein Verzögerungsglied 301, das ein anliegendes Auswahlsignal A um die Zeit-

dauer $\tau$ verzögert an seinem Ausgang abgibt. Das am Ausgang des Verzögerungsgliedes 301 anliegende Auswahlsignal ist in der Figur 3 mit dem Bezugzeichen A' gekennzeichnet. Darüber hinaus erkennt man in der Figur 3 ein erstes Und-Glied 302, ein zweites Und-Glied 303, ein drittes Und-Glied 304 sowie ein Oder-Glied 305. Die drei Und-Glieder 302, 303 und 304 weisen jeweils einen invertierenden und einen nichtinvertierenden Eingang auf.

Die Arbeitsweise der Steuereinrichtung 30 lässt sich wie folgt zusammenfassen:

Wird das Auswahlsignal A von einer logischen 0 auf eine logische 1 umgeschaltet, so ergibt sich während der Verzögerungszeit $\tau$ unabhängig vom Signalpegel des rückgekoppelten Rückmeldesignals Srk stets ein Steuersignal ST mit einer logischen 1 bzw. mit einem hohen Signalpegel, so dass die Stromversorgungseinrichtung 20 gemäß Figur 1 aufgefordert wird, die Ausgangsspannung Ua zu erhöhen. Während der Verzögerungsdauer $\tau$ des Verzögerungsgliedes 301 wird also die Ausgangsspannung Ua kontinuierlich erhöht, so dass diese die Umschaltspannung Um = 12,5 V gemäß Figur 2 überschreiten kann und in den Bereich der zweiten Sollspannungshöhe Us2 gelangen kann, in dem während eines anschließenden Regelbetriebs eine Regelung auf das Einhalten der zweiten Sollspannungshöhe Us2 hin erfolgen wird.

Wird hingegen das Auswahlsignal A von einer logischen 1 auf eine logische 0 umgeschaltet, so wird - unabhängig vom logischen Pegel des rückgekoppelten Rückmeldesignals Srk - am Ausgang des Oder-Gliedes 305 für die Verzögerungszeit $\tau$ ein Steuersignal ST mit einer logischen 0 bzw. mit einem niedrigen Signalpegel erzeugt, was die Pulsweitenmodulationseinrichtung PWM der Stromversorgungseinrichtung 20 zwingt, die Ausgangsspannung Ua zu erniedrigen. Während der Verzögerungszeit $\tau$ wird die Ausgangsspannung Ua von der zweiten Sollspannungshöhe Us2 = 15 V somit kontinuierlich abfallen, die Umschaltspannung Um = 12,5 V passieren und in den Bereich der ersten Sollspannungshöhe Us1 kommen (vgl. Figur 2).

Für eine Zeitdauer, die der Verzögerungszeit $\tau$ des Verzögerungsgliedes 301 entspricht, wird nach einem Umschalten des Auswahlsignals A die Steuereinrichtung 30 also von einem Regelbetrieb in einen Steuerbetrieb geschaltet, in dem die Ausgangsspannung Ua kontinuierlich erhöht oder erniedrigt wird, damit die erste Sollspannungshöhe Us1 oder die zweite Sollspannungshöhe Us2 zumindest so annährend erreicht wird, dass im Rahmen eines weiteren Regelbetriebs, wie er oben bereits beschrieben wurde, ein weiteres Regeln auf die erste Sollspannungshöhe oder die zweite Sollspannungshöhe möglich ist.

Bei dem Ausführungsbeispiel gemäß Figur 3 ist lediglich ein einziges Verzögerungsglied 301 vorhanden, so dass die Verzögerungszeit $\tau$ bzw. die Zeitdauer des Steuerbetriebs der Steuereinrichtung 30 bei einem Umschalten von der zweiten Sollspannungshöhe Us2 auf die erste Sollspannungshöhe mit der Zeitdauer bei einem ungekehrten Umschalten stets identisch ist. Eine Ausführungsform, wie sie in der Figur 3 gezeigt ist, ist also immer dann vorteilhaft, wenn die Spannungsübergangszeiten in beiden Richtungen zumindest näherungsweise gleich groß sind.

In manchen Fällen kann es jedoch sein, dass der Übergang von der zweiten Sollspannungshöhe Us2 zur ersten Sollspannungshöhe Us1 länger oder kürzer dauert als der umgekehrte Übergang von der ersten Sollspannungshöhe Us1 zur zweiten Sollspannungshöhe Us2. In diesem Fall kann es vorteilhaft sein, für jeden der beiden Übergänge individuelle Verzögerungsglieder vorzusehen. Eine solche Ausführungsform für die Steuereinrichtung 30 zeigt beispielhaft die Figur 4. Man erkennt in der Figur 4 ein erstes Verzögerungsglied 301, ein erstes Und-Glied 302, ein zweites Und-Glied 303, ein drittes Und-Glied 304, ein Oder-Glied 305 sowie ein zweites Verzögerungsglied 306. Die Verzögerungszeiten der beiden Verzögerungsglieder 301 und 306 sind dabei unterschiedlich und mit unterschiedlichen Bezugzeichen $\tau 1$ und $\tau 2$ gekennzeichnet.

Wird nun das Auswahlsignal A am Eingang der Steuereinrichtung 30 von einer logischen 0 auf eine logische 1 umgeschaltet, so wird der sich aufgrund des Umschaltens ergebende Steuerbetrieb der Verzögerungszeit $\tau 1$ des ersten Verzögerungsglieds 301 entsprechen. Der bei einem Umschalten des Auswahlsignals A von einer logischen 1 auf eine logische 0 auftretende Steuerbetrieb wird hingegen durch die Verzögerungszeit $\tau 2$ des zweiten Verzögerungsgliedes 306 bestimmt.

Im Übrigen gelten die Erläuterungen zur Arbeitsweise der Steuereinrichtung gemäß Figur 3 für die Steuereinrichtung gemäß Figur 4 entsprechend.

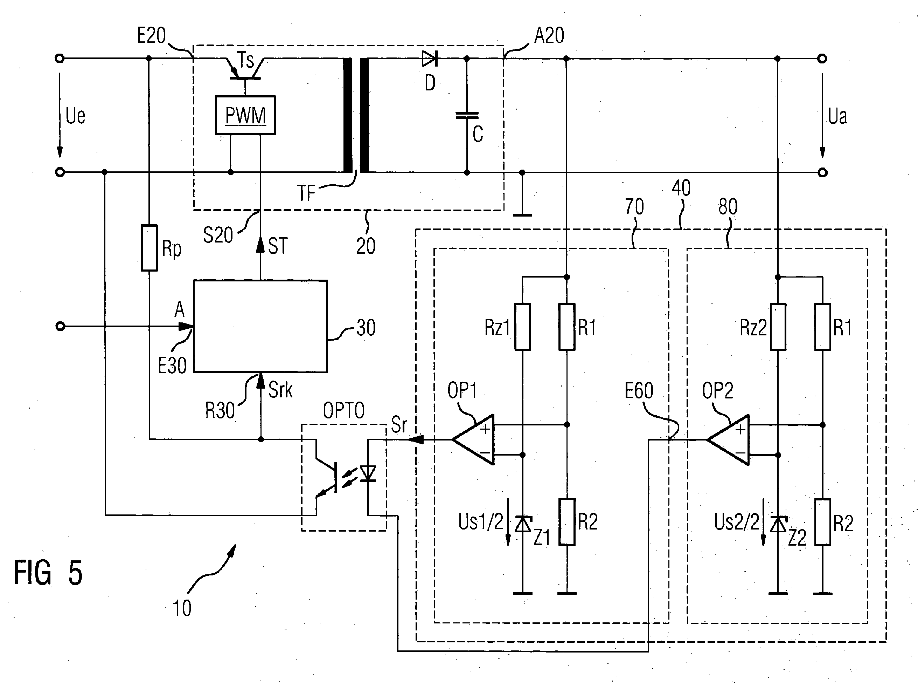

Die Figur 5 zeigt ein zweites Ausführungsbeispiel für eine Anordnung 10 mit einer potenzialgetrennten Stromversorgungseinrichtung 20, einer Steuereinrichtung 30 sowie einem Spannungsbewertungsmodul 40, das über einen Optokoppler OPTO mit der Steuereinrichtung 30 in Verbindung steht.

Im Unterschied zu dem Ausführungsbeispiel gemäß Figur 1 ist das Spannungsbewertungsmodul 40 nicht mit einer Umschalteinrichtung und einem Hauptschwellenwertschalter ausgestattet, sondern stattdessen mit einem ersten Schwellenwertschalter 70 und einem zweiten Schwellenwertschalter 80. Der erste Schwellenwertschalter 70 weist zwei Widerstände R1 und R2 auf, die beide gleich groß sind und einen Spannungsteiler bilden und an den Pluseingang eines Operationsverstärkers OP1 angeschlossen sind. An den Minuseingang des Operationsverstärkers OP1 ist eine Zenerdiode Z1 angeschlossen, deren Zenerdiodenspannung Us1/2 5V beträgt und die über einen Vorwiderstand mit der Ausgangsspannung Ua in Verbindung steht.

Die Zenerdiode Z1 ist über einen Vorwiderstand Rz1 mit der Ausgangsspannung Ua der Stromversorgungseinrichtung 20 beaufschlagt. Aufgrund der Beschaltung des Operationsverstärkers OP1 wird dieser an seinem Ausgang ein Ausgangssignal mit einem hohen Signalpegel erzeugen, wenn die Ausgangsspannung Ua die Us1 = 10 V überschreitet. Unterschreitet hingegen die Ausgangsspannung Ua diesen Wert von Us1 = 10 V, so wird der Operationsverstärker OP1 ein Ausgangssignal mit einem niedrigen Signalpegel erzeugen.

Der zweite Schwellenwertschalter 80 ist ähnlich aufgebaut wie der erste Schwellenwertschalter 70. Auch er umfasst einen Spannungsteiler, der durch zwei Widerstände R1 und R2, die beide gleich groß sind, gebildet ist. Der Spannungsteiler ist an den Pluseingang des Operationsverstärkes OP2 des zweiten Schwellenwertschalters 80 angeschlossen. Der Minuseingang des Operationsverstärkers OP2 steht mit einer Zenerdiode Z2 in Verbindung, deren Zenerdiodenspannung Us2/2 7,5 V beträgt. Die Zenerdiode Z2 des zweiten Schwellenwertschalters 80 ist ebenfalls über einen Vorwiderstand Rz2 mit der Ausgangsspannung Ua beaufschlagt.

Der Operationsverstärker OP2 wird ausgangsseitig ein Ausgangssignal mit einem hohen Signalpegel erzeugen, wenn die Ausgangsspannung Ua = Us2 = 15 V überschreitet. Andernfalls wird der Operationsverstärker OP2 ausgangsseitig ein Ausgangssignal mit einem niedrigen Signalpegel erzeugen.

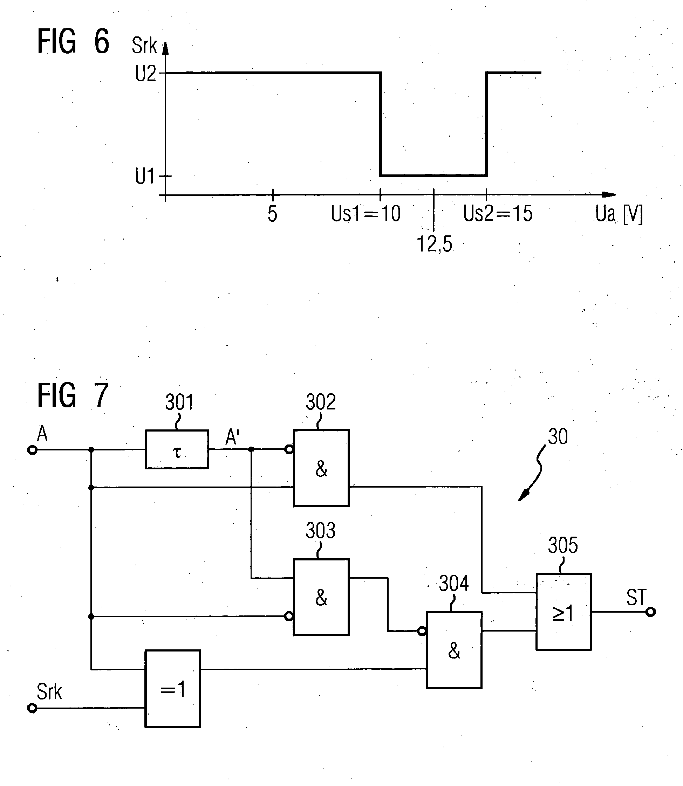

Wie sich in der Figur 5 erkennen lässt, ist der Ausgang des Operationsverstärkers OP1 an einen Pluseingang der Diode des Optokopplers OPTO angeschlossen, wohingegen der Operationsverstärker OP2 des zweiten Schwellenwertschalters 80 mit dem Minuseingang der Diode des Optokopplers OPTO in Verbindung steht. Die beiden Operationsverstärker OP1 und OP2 bzw. die beiden Schwellenwertschalter 70 und 80 arbeiten somit gegeneinander. Dies ist näher in der Figur 6 dargestellt. Es lässt sich erkennen, dass bei einer Ausgangsspannung Ua < 10 V keiner der beiden Operationsverstärker OP1 und OP2 durchschaltet, so dass die Diode des Optokopplers OPTO nicht aktiviert wird und der Transistor des Optokopplers OPTO ausgeschaltet bleibt. Am Rückmeldeeingang R30 der Steuereinrichtung 30 bildet sich somit ein rückgekoppeltes Rückmeldesignal Srk mit einem hohen Signalpegel.

Überschreitet die Ausgangsspannung Ua die erste Sollspannungshöhe Us1 und liegt in einem Bereich zwischen 10 V und 15 V, so wird der erste Operationsverstärker OP1 des ersten Schwellenwertschalters 70 eingeschaltet werden und ausgangsseitig einen hohen Signalpegel erzeugen, der am Pluseingang der Diode anliegt. Da der zweite Operationsverstärker OP2 des zweiten Schwellenwertschalters 80 noch nicht durchgeschaltet hat und somit einen niedrigen Signalpegel erzeugt, wird die Diode des Optokopplers OPTO aktiviert und der Transistor T des Optokopplers OPTO durchgeschaltet. Damit ergibt sich am Rückmeldeeingang R30 der Steuereinrichtung 30 ein niedriger Signalpegel.

Bei Überschreiten der zweiten Sollspannungshöhe Us2 = 15 V schaltet zusätzlich Operationsverstärker OP2 durch, so dass beide Operationsverstärker ähnliche oder identische Signalpegel erzeugen. Aus diesem Grunde wird der Optokoppler seinen Transistor nicht durchschalten können, so dass sich am Rückmeldeeingang R30 der Steuereinrichtung 30 ein Rückmeldesignal Srk mit einem hohen Signalpegel U2 ergibt.

Im Unterschied zu dem Ausführungsbeispiel gemäß Figur 1 treten beim Rückmeldesignal Srk somit lediglich zwei Signalwechsel auf, nämlich einer bei 10 V und einer bei 15 V, und nicht drei Signalwechsel wie beim Ausführungsbeispiel gemäß Figur 1.

Da die Signalwechsel bei der ersten Sollspannungshöhe Us1 = 10 V und bei der zweiten Sollspannungshöhe Us2 = 15 V entgegengesetzt sind, muss die Steuereinrichtung 30 im Vergleich zu den Ausführungsbeispielen gemäß den Figuren 3 und 4 geringfügig modifiziert werden.

Ein Ausführungsbeispiel für eine für die Anordnung 10 gemäß Figur 5 geeignete Steuereinrichtung 30 ist beispielhaft in der Figur 7 gezeigt. Es lässt sich erkennen, dass bei dieser Steuereinrichtung 30 ein zusätzlicher steuerbarer Inverter in Form eines XOR-Gliedes vorhanden ist, der eingangsseitig mit dem Rückmeldesignal Srk sowie mit dem Auswahlsignal A beaufschlagt ist. Dieses zusätzliche XOR-Glied ermöglicht es der Steuereinrichtung 30, ausgangsseitig ein Steuersignal ST zu erzeugen, wie es im Zusammenhang gemäß den Figuren 1 bis 4 im Detail erläutert worden ist. Diesbezüglich sei also auf die obigen Ausführungen verwiesen.

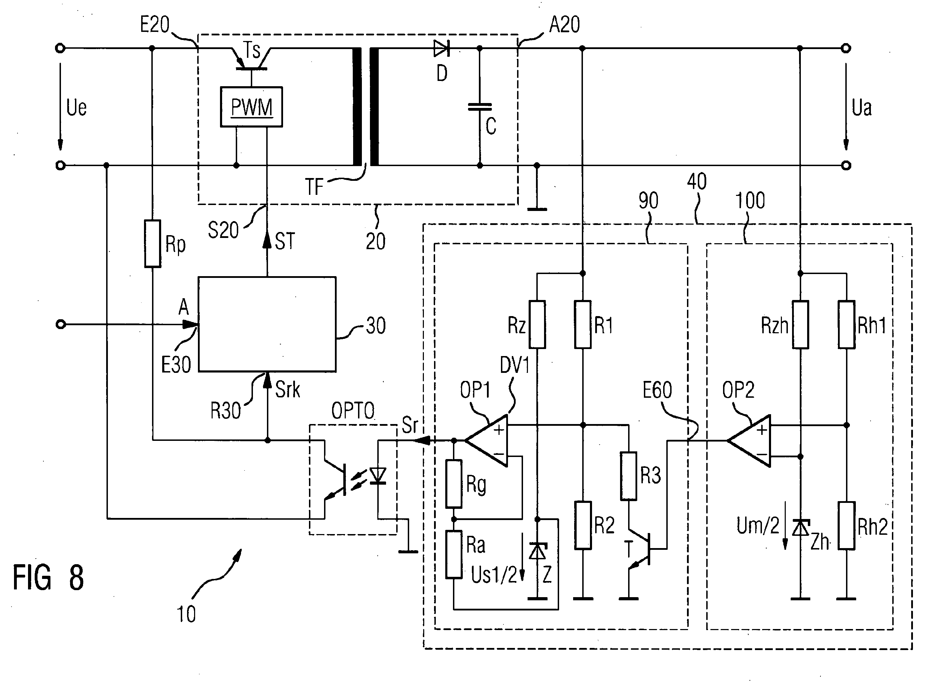

Die Figur 8 zeigt ein Ausführungsbeispiel für eine Anordnung 10, bei der das Spannungsbewertungsmodul 40 eine Verstärkereinrichtung 90 sowie eine Umschalteinrichtung 100 umfasst. Die Aufgabe der Umschalteinrichtung 100 besteht darin, den Arbeitspunkt der Verstärkereinrichtung 90 umzustellen. Die Umschalteinrichtung 100 gemäß Figur 8 kann mit der Umschalteinrichtung 50 gemäß Figur 1 beispielsweise identisch sein.

Der Aufbau der Verstärkereinrichtung 90 entspricht im Wesentlichen dem Aufbau des Hauptschwellenwertschalters 60 gemäß Figur 1. Im Unterschied zu dem Hauptschwellenwertschalter 60 sind bei der Verstärkereinrichtung 90 zusätzlich zwei Rückkoppelwiderstände Ra und Rg vorgesehen, die gemeinsam mit dem Operationsverstärker OP1 einen Differenzverstärker DV1 bilden.

Der Arbeitspunkt des Differenzverstärkers DV1 ist abhängig von dem Teilerverhältnis des durch die R1, R2 und ggf. R3 gebildeten Spannungsteilers. Durch Ein- oder Ausschalten des Transistors T kann das Teilerverhältnis der Widerstände R1, R2 und R3 umgeschaltet werden, so dass der Arbeitspunkt des Differenzverstärkers DV1 - bezogen auf die Ausgangsspannung Ua - wahlweise 10 V oder 15 V beträgt.

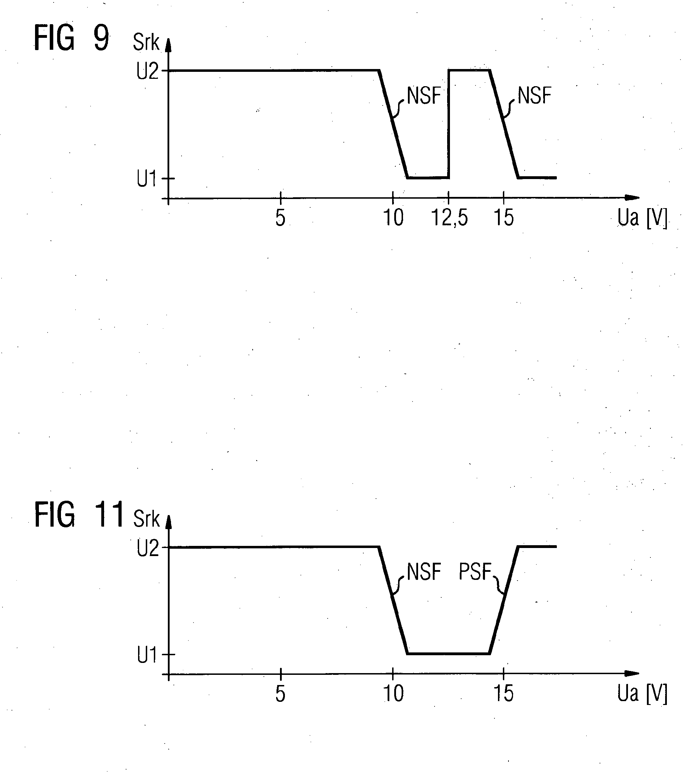

Das rückgekoppelte Rückmeldesignal Srk am Rückmeldeeingang R30 der Steuereinrichtung 30 ist in der Figur 9 in Abhängigkeit von der Ausgangsspannung Ua dargestellt. Es lässt sich erkennen, dass sowohl im Bereich der ersten Sollspannungshöhe Us1 = 10 V als auch im Bereich der zweiten Sollspannungshöhe Us2 = 15 V eine negative Signalflanke NSF auftritt, deren negative Flankensteilheit von dem Verstärkungsfaktor des Differenzverstärkers DV1 bzw. von der Dimensionierung der Widerstände Ra und Rg abhängt. Anhand der negativen Signalflanken NSF kann die Steuereinrichtung 30 also feststellen, ob die jeweilige Sollspannungshöhe Us1 oder Us2 über- oder unterschritten wird und ein entsprechendes Steuersignal ST für die Stromversorgungseinrichtung 20 erzeugen, mit dem das Einhalten der gewünschten Sollspannungshöhe am Ausgang A20 erzwungen wird.

Im Unterschied zu dem Ausführungsbeispiel gemäß Figur 1 hat die Steuereinrichtung 30 bei dem Ausführungsbeispiel gemäß Figur 8 zusätzlich die Möglichkeit, die Signalflanke näher auszuwerten, weil nämlich die Pegelhöhe des rückgekoppelten Rückmeldesignals Srk die Ausgangsspannung Ua auch quantitativ angibt. Durch eine entsprechende Auswertung des Signalpegels des Rückmeldesignals Srk kann die Steuereinrichtung 30 somit nicht nur feststellen, ob die jeweilige Sollspannungshöhe Us1 bzw. Us2 über- oder unterschritten wird, sondern sie kann darüber hinaus auch den jeweiligen Spannungswert der Ausgangsspannung Ua quantitativ bestimmen und zur Regelung heranzuziehen, indem sie aus dem Diagramm gemäß Figur 9 in Abhängigkeit von dem jeweiligen Signalpegel des Rückmeldesignals die jeweilige Ausgangsspannung Ua ausliest. Dabei ist eine sehr genaue quantitative Bestimmung der Ausgangsspannung Ua möglich, weil für jede Sollspannung eine sollspannungsindividuelle, und damit sehr steile Signalflanke ausgewertet werden kann.

Hinsichtlich der Steuerung der Stromversorgungseinrichtung 20 kann auf die obigen Ausführungen im Zusammenhang mit der Figur 1 Bezug genommen werden, da auch bei dem Ausführungsbeispiel gemäß Figur 8 die Signalflanken des Rückmeldesignals für die Ansteuerung der Pulsweitenmodulationseinrichtung PWM herangezogen werden können, unabhängig davon, ob zusätzlich eine quantitative Auswertung erfolgt oder nicht.

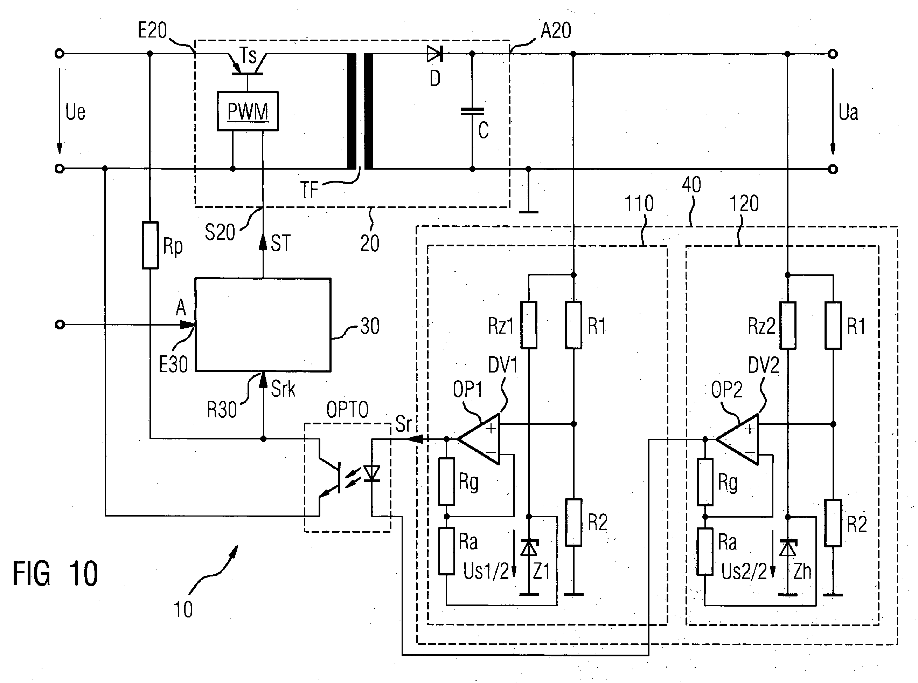

In der Figur 10 ist ein Ausführungsbeispiel für eine Anordnung gezeigt, bei der das Spannungsbewertungsmodul 40 eine erste Verstärkereinrichtung 110 sowie eine zweite Verstärkereinrichtung 120 aufweist.

Der Aufbau der ersten Verstärkereinrichtung 110 entspricht im Wesentlichen dem Aufbau des ersten Schwellenwertschalters 70 gemäß Figur 5. Im Unterschied dazu sind an den Minuseingang des Operationsverstärkers OP1 lediglich zwei Rückkoppelwiderstände Ra und Rg angeschlossen, die gemeinsam mit dem Operationsverstärker OP1 einen ersten Differenzverstärker DV1 bilden.

Der Aufbau der zweiten Verstärkereinrichtung 120 entspricht im Wesentlichen dem Aufbau des zweiten Schwellenwertschalters 80 gemäß Figur 5. Im Unterschied dazu ist lediglich der Minuseingang des Operationsverstärkers OP2 mit zwei Rückkoppelwiderständen Ra und Rg beschaltet, die gemeinsam mit dem Operationsverstärker OP2 einen zweiten Differenzverstärker DV2 bilden.

Es lässt sich in der Figur 10 erkennen, dass die beiden Verstärkereinrichtungen 110 und 120 gegenläufig arbeiten, wie dies bereits im Zusammenhang mit der Figur 5 beispielhaft erläutert wurde. So ist der Ausgang des ersten Differenzverstärkers DV1 der ersten Verstärkereinrichtung 110 an den Pluseingang der Diode des Optokopplers OPTO angeschlossen, wohingegen der Ausgang des zweiten Differenzverstärkers DV2 der zweiten Verstärkereinrichtung 120 an den Minuseingang der Diode des Optokopplers OPTO angeschlossen ist. Diese Beschaltung des Optokopplers OPTO führt dazu, dass die beiden Differenzverstärker je nach dem Niveau der Ausgangsspannung Ua gegenläufig arbeiten, wie dies beispielhaft die Figur 11 zeigt.

In der Figur 11 lässt sich erkennen, dass bei einer Ausgangsspannung im Bereich von Ua = 10 V das rückgekoppelte Rückmeldesignal Srk eine negative Signalflanke NSF aufweist, deren Flankensteilheit durch die Verstärkung des ersten Differenzverstärkers DV1 bestimmt wird. Der Arbeitspunkt des ersten Differenzverstärkers DV1 wird durch das Teilerverhältnis des Spannungsteilers am Pluseingang des Operationsverstärkers OP1 bzw. der Vorspannung der Zenerdiode Z1 bestimmt.

Bei Erreichen einer Ausgangsspannung von ca. Ua = 10 V wird aufgrund des Einschaltens der Leuchtdiode des Optokopplers und damit dem Einschalten des Fototransistors des Optokopplers der Signalpegel am Rückmeldeeingang R30 der Steuereinrichtung 30 kontinuierlich reduziert, bis das Rückmeldesignal Srk einen niedrigen Signalpegel U1 erreicht hat.

Steigt die Ausgangsspannung Ua weiter an und erreicht den Bereich von ca. 15 V, so wird der zweite Differenzverstärker DV2, dessen Arbeitspunkt bei 15 V liegt, aktiviert, so dass dieser das Potenzial am Minuseingang der Leuchtdiode des Optokopplers OPTO anheben wird. Dies führt dazu, dass die Potenzialdifferenz zwischen dem Plusanschluss der Leuchtdiode und dem Minusanschluss der Leuchtdiode abnimmt, die Leuchtdiode weniger leuchtet, der Fototransistor weniger durchschaltet und das Potenzial am Rückmeldeeingang R30 der Steuereinrichtung 30 wieder ansteigt. Die sich ergebende positive Signalflanke ist in der Figur 11 mit dem Bezugszeichen PSF gekennzeichnet.

Bei dem Ausführungsbeispiel gemäß Figur 10 hat die Steuereinrichtung 30 also die Möglichkeit anhand der beiden Signalflanken NSF und PSF zu erkennen, wie die Stromversorgungseinrichtung 20 angesteuert werden muss, damit die Ausgangsspannung Ua im Bereich der jeweiligen Sollspannungshöhe Us1 oder Us2 bleibt. Darüber hinaus hat die Steuereinrichtung 30 die Möglichkeit, die jeweilige Ausgangsspannung Ua quantitativ zu bestimmen, indem sie anhand des Diagramms in der Figur 11 und anhand des jeweiligen Signalpegels am Rückmeldeeingang R30 feststellt, wie groß die Ausgangsspannung Ua tatsächlich ist.

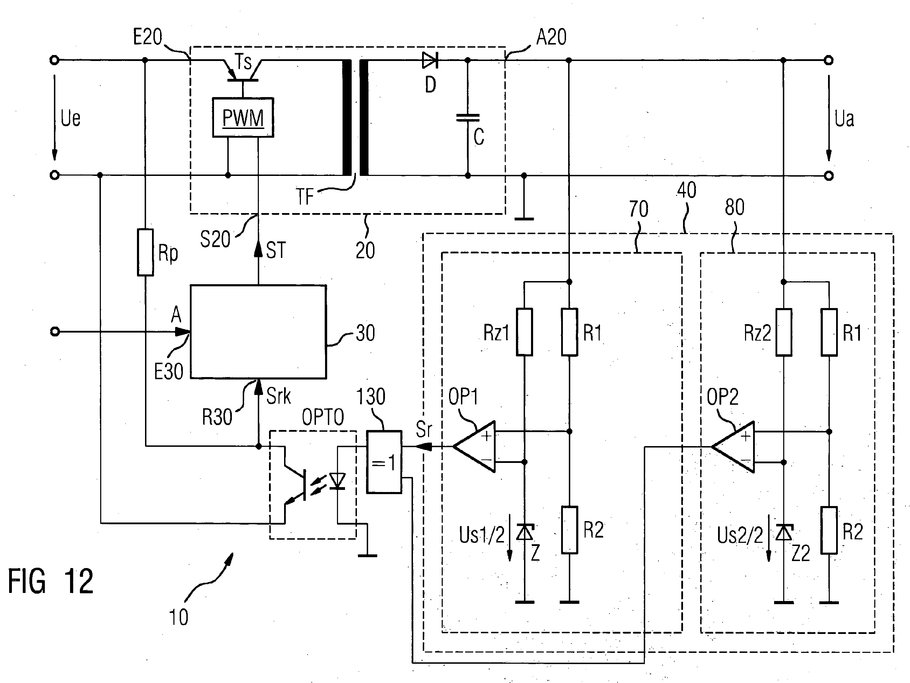

Die Figur 12 zeigt ein Ausführungsbeispiel für eine Anordnung 10, bei der das Spannungsbewertungsmodul 40 zwei Schwellenwertschalter 70 und 80 aufweist, die ausgangsseitig mit einem XOR-Glied 130 in Verbindung stehen. Aufgrund des XOR-Gliedes 130 kommt es zu einem Verlauf des rückgekoppelten Rückmeldesignals Srk, wie sie bereits in der Figur 6 gezeigt worden ist. Überschreitet die Ausgangsspannung Ua die erste Sollspannungshöhe Us1 = 10 V, so kommt es zu einem Signalwechsel von einem hohen Signalpegel U2 zu einem niedrigen Signalpegel U1. Bei einem Überschreiten der zweiten Sollspannungshöhe Us2 = 15 V kommt es zu einem gegenläufigen Signalwechsel, von einem niedrigen Signalpegel U1 zu einem hohen Signalpegel U2.

Durch das XOR-Glied 130 arbeiten die beiden Schwellenwertschalter 70 und 80 gegenläufig, wie dies auch aufgrund der entsprechenden Beschaltung des Optokopplers OPTO bei dem Ausführungsbeispiel gemäß Figur 5 der Fall ist. Vom Schaltverhalten entspricht somit die Anordnung gemäß Figur 5 der Anordnung gemäß Figur 12.

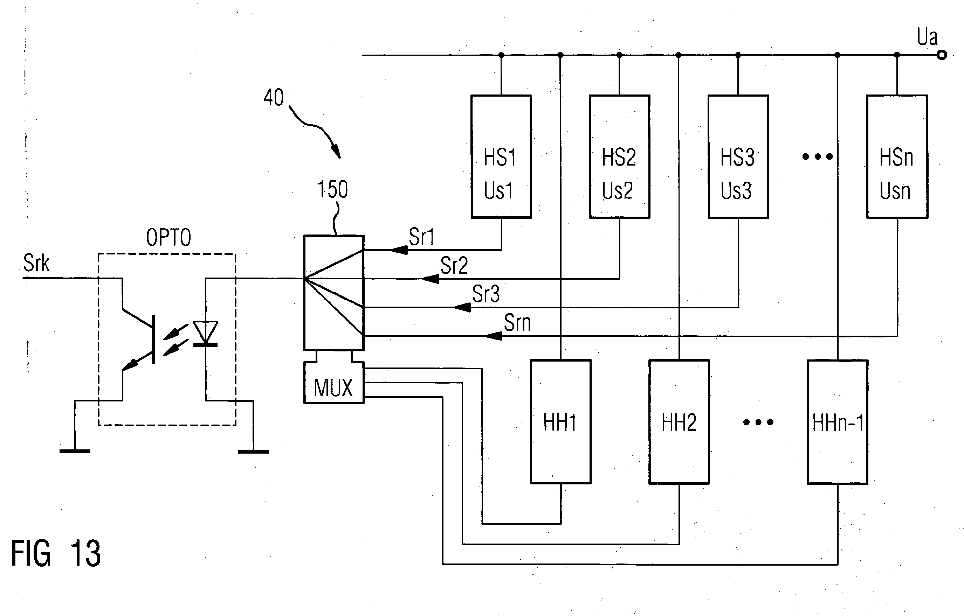

Die Figur 13 zeigt ein Ausführungsbeispiel für ein Spannungsbewertungsmodul 40, das anstelle des Spannungsbewertungsmoduls 40 bei der Anordnung 10 gemäß Figur 1 eingesetzt werden kann. Das Spannungsbewertungsmodul 40 umfasst n Hauptschwellenwertschalter, die in der Figur 13 mit dem Bezugszeichen HS1, HS2, HS3, ..., HSn bezeichnet sind. Die Hauptschwellenwertschalter HS1 bis HSn sind ausgangsseitig mit einem Multiplexer 150 verbunden, der stets eines der Rückmeldesignale Sr1, Sr2, Sr3, ..., Srn zu dem Optokoppler OPTO durchschaltet. Die Schaltschwellen der n Hauptschwellenwertschalter HS1 - HSn sind unterschiedlich gewählt, und zwar in Abhängigkeit von den jeweiligen Sollspannungshöhen, die von der Steuereinrichtung 30 eingestellt werden können. Die Schaltschwelle des ersten Hauptschwellenwertschalters HS1 ist in der Figur 13 mit dem Bezugszeichen Us1 gekennzeichnet. In entsprechender Weise sind die Schaltschwellen der übrigen Hauptschwellenschalter HS2 - HSn mit den Bezugszeichen Us2-Usn gekennzeichnet. Dabei wird davon ausgegangen, dass die Hauptschwellenwertschalter HS1 - HSn in gleicher Weise arbeiten, also bei Unterschreiten ihrer jeweiligen Schaltschwelle entweder ein Rückmeldesignal Sr mit einem hohen Signalpegel oder einem niedrigen Signalpegel erzeugen.

Die Ansteuerung des Multiplexers 150 erfolgt über Hilfsschwellenwertschalter HH1-HHn-1, an denen eingangsseitig jeweils die Ausgangsspannung Ua gemäß Figur 1 anliegt. Die Hilfsschwellenwertschalter weisen jeweils Schaltschwellen auf, die zwischen Schaltschwellen der zugeordneten Hauptschwellenschalter HS1- HSn liegen. Beispielsweise liegt die Schaltschwelle des Hilfsschwellenwertschalters HH1 zwischen den Schaltschwellen Us1 und Us2 der beiden Hauptschwellenwertschalter HS1 und HS1 und die Schaltschwelle des Hilfsschwellenwertschalters HH2 zwischen den Schaltschwellen Us2 und Us3 der beiden Hauptschwellenschalter HS2 und HS3. Die Schaltschwelle des Hilfsschwellenwertschalters HHn-1 liegt demgemäß zwischen der Schaltschwelle des n-1-ten Hauptschwellenwertschalters HSn-1 und der des n-ten Hauptschwellenwertschalters HSn.

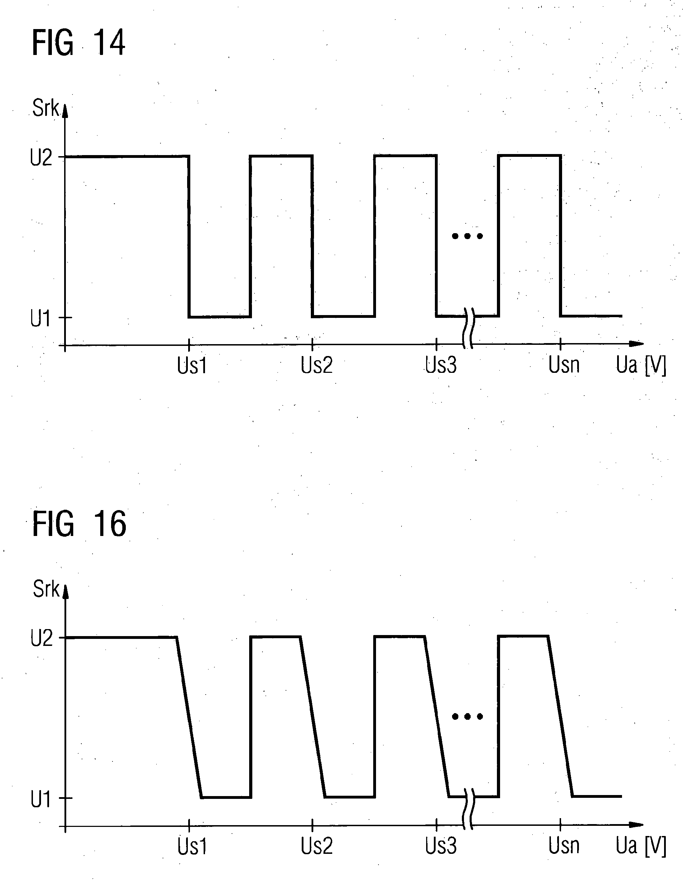

Der Multiplexer 150 wird je nach dem eingangsseitig anliegenden Steuersignal, das sich aus den Ausgangssignalen der Hilfsschwellenwerte HH1 - HHn-1 bildet, das Rückmeldesignal des zugeordneten Hauptschwellenwertschalters HS1 - HSn zu dem Optokoppler weiterleiten. Das sich ergebende rückgekoppelte Rückmeldesignal Srk am Rückmeldeeingang R30 der Steuereinrichtung 30 gemäß Figur 1 ist beispielhaft in der Figur 14 gezeigt. Man erkennt, dass jeweils Signalwechsel beim Über oder Unterschreiten der Schwellenwerte der Hauptschwellenschalter HS1 - HSn sowie beim Über oder Unterschreiten der Schwellenwerte der Hilfsschwellenwertschalter HH1 - HHn-1 auftreten.

Die Steuereinrichtung 30 hat somit die Möglichkeit, im Rahmen ihres Regelbetriebs eine vorgegebene Sollspannungshöhe einzustellen, indem sie sich auf die jeweilige Signalflanke im Bereich dieser Sollspannungshöhe einstellt. Um ein Umstellen der Sollspannungshöhe zu erreichen, kann sie im Rahmen eines Steuerbetriebs die Ausgangsspannung Ua erhöhen oder reduzieren, wobei sie durch Zählen der bei der Erhöhung oder Reduzierung auftretenden Signalflanken erfassen kann, welche Sollspannungshöhe Ua am Ausgang A20 tatsächlich vorliegt, obwohl im Rahmen der Rückmeldung durch das Rückmeldesignal des Multiplexers 150 keine absolute Angabe des Spannungsniveaus erfolgt.

Um ein solches Mitzählen der Pegelwechsel durch die Steuereinrichtung 30 besonders einfach zu ermöglichen, wird es als vorteilhaft angesehen, wenn diese eine Rechnereinrichtung (z. B. Prozessor) aufweist, die derart programmiert ist, dass sie in der beschriebenen Weise das Rückmeldesignal Srk auswerten und das Steuersignal ST gemäß Figur 1 bilden kann. Auch bei den anderen Ausführungsbeispielen, die oben im Zusammenhang mit den Figuren 1 bis 14 beschrieben worden sind, wird eine Realisierung der Steuereinrichtung 30 durch eine Rechnereinrichtung mit Speicher, in dem ein Steuerprogramm gespeichert ist, als vorteilhaft angesehen.

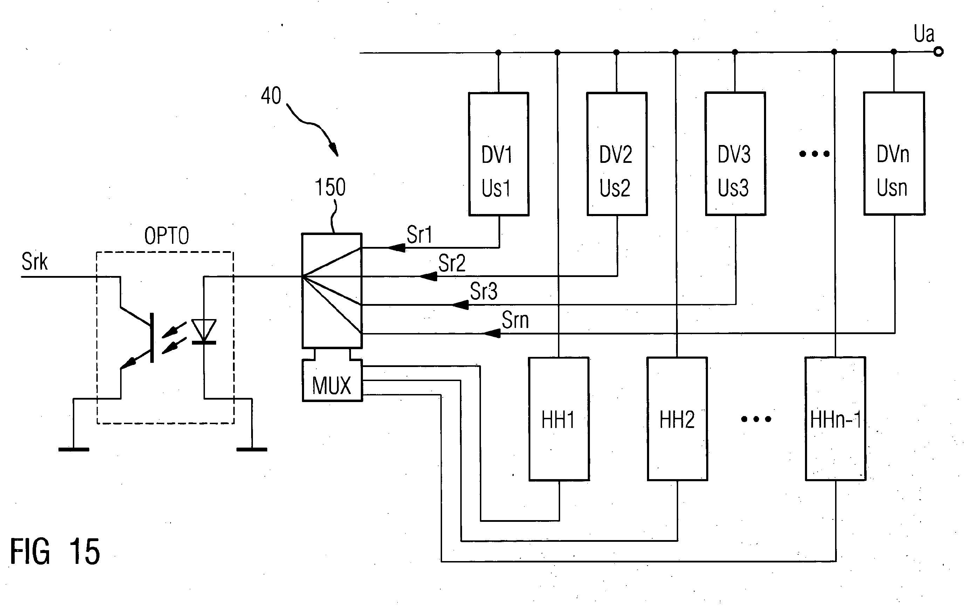

Die Figur 15 zeigt ein Ausführungsbeispiel für ein Spannungsbewertungsmodul 40, das ebenfalls anstelle des Spannungsbewertungsmoduls 40 bei der Anordnung gemäß Figur 1 eingesetzt werden kann. Das Ausführungsbeispiel gemäß Figur 15 entspricht dem Ausführungsbeispiel gemäß Figur 13 mit dem Unterschied, dass anstelle der Hauptschwellenschalter HS1 - HSn gemäß Figur 13 nun Differenzverstärker DV1 - DVn eingesetzt werden, deren Ausgangssignal vom Multiplexer 150 in Abhängigkeit von den Ausgangssignalen der Hilfsschwellenwertschalter HH1-HHn-1 zum Optokoppler durchgeschaltet werden. Der Verlauf des rückgekoppelten Rückmeldesignals Srk über der Ausgangsspannung Ua ist beispielhaft in der Figur 16 dargestellt.

Der Signalpegel des Rückmeldesignals Srk ermöglicht es der Steuereinrichtung 30, eine vorgegebene Sollspannungshöhe einzustellen, indem sie die entsprechende sollspannungsindividuelle Signalflanke, also jeweils die im Bereich dieser Sollspannungshöhe befindliche Signalflanke, auswertet, wie dies oben im Zusammenhang mit der Figur 9 beschrieben worden ist.

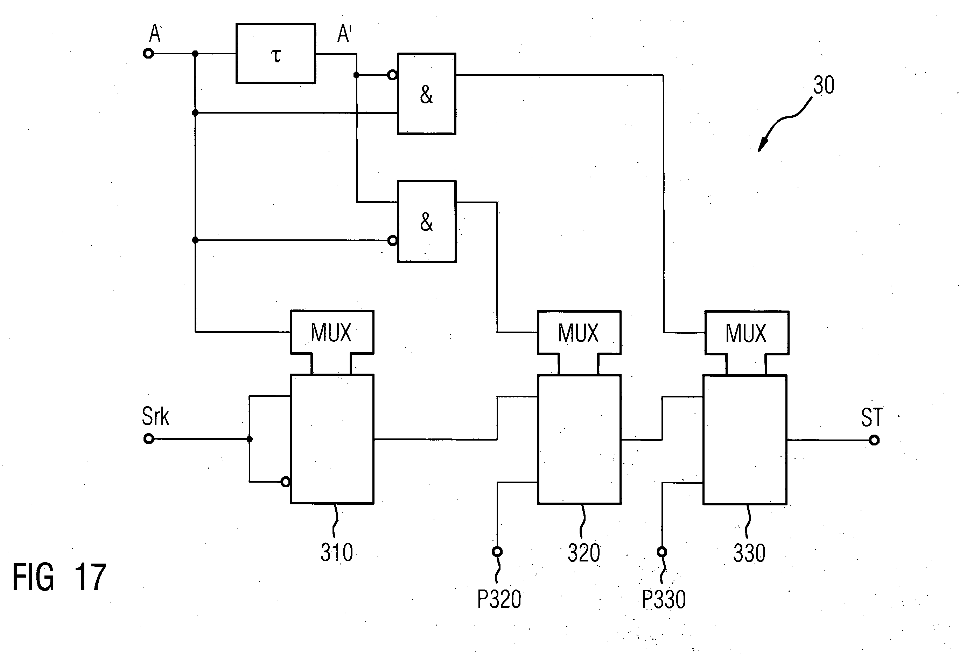

In der Figur 17 ist ein Ausführungsbeispiel für eine Steuereinrichtung 30 gezeigt, die vorzugsweise anstelle der Einrichtung gemäß Figur 7 eingesetzt wird, wenn das rückgekoppelte Rückmeldesignal Srk indirekt von Differenzverstärkern statt von Hauptschwellenwertschaltern abhängig ist. Durch den Einsatz der Multiplexer 310, 320 und 330 besteht die Möglichkeit, das quantitativ von der Ausgangsspannung Ua abhängige Rückmeldesignal Srk ohne Informationsverlust zum Steuersignal ST umzuformen. Der Multiplexer 310 ist das analogtechnische Äquivalent des XOR-Glieds gemäß Figur 7 und kommt vorzugsweise dann zum Einsatz, wenn keine Hilfsschwellenwertschalter im Spannungsbewertungsmodul 40, z.B. in einem Aufbau gemäß Figur 10, vorgesehen sind. Der Multiplexer 320 ist zusammen mit dem Pegelanschluss P320 das analogtechnische Äquivalent des Und-Glieds 304 gemäß Figur 7 und schaltet bedarfsweise den Pegel des Pegelanschluss P320 durch. Entsprechend der hier schon mehrfach verwendeten beispielhaften Signalpegelzuordnungen ist der Pegelanschluss P320 mit einem niedrigen Signalpegel U1 beaufschlagt, um eine Absenkung der Ausgangsspannung Ua am Ausgang A20 herbeizuführen. Der Multiplexer 330 ist zusammen mit dem Pegelanschluss P330 das analogtechnische Äquivalent des Oder-Glieds 305 gemäß Figur 7 und schaltet bedarfsweise den Pegel des Pegelanschluss P330 durch. Wiederum entsprechend den beispielhaften Signalpegelzuordnungen ist der Pegelanschluss P330 mit einem hohen Signalpegel U2 beaufschlagt, um eine Erhöhung der Ausgangsspannung Ua am Ausgang A20 herbeizuführen.

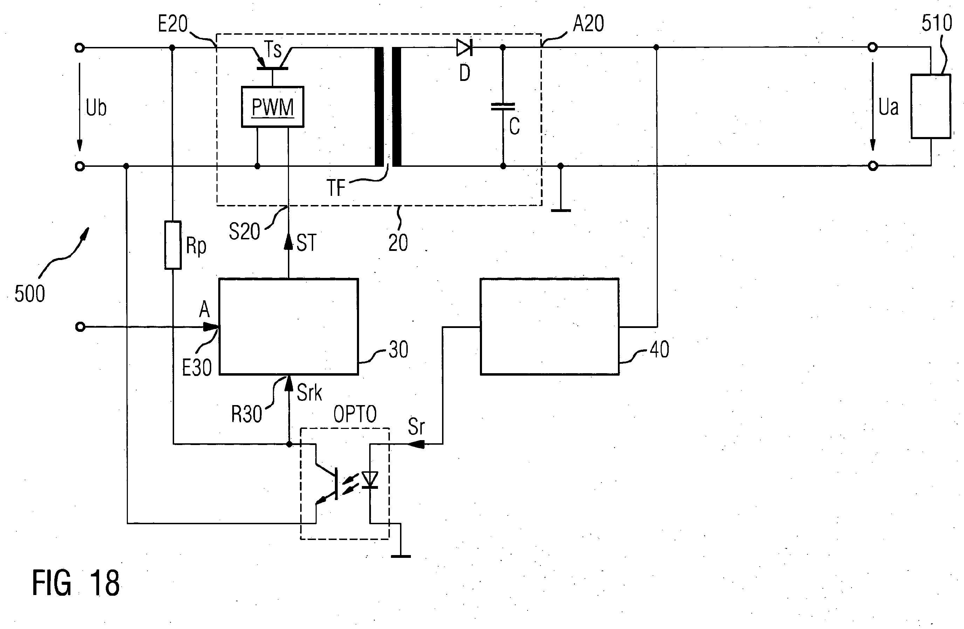

Die Figur 18 zeigt ein Ausführungsbeispiel für eine Eisenbahnsignaleinrichtung 500, die eine Anordnung 10, wie sie im Zusammenhang mit den Figuren 1-16 erläutert worden ist, aufweist. An den Ausgang A20 der Stromversorgungseinrichtung 20 ist ein optischer Signalgeber 510 der Eisenbahnsignaleinrichtung angeschlossen. An den Eingang E20 der Stromversorgungseinrichtung wird eine Betriebsspannung Ub angelegt, die über die potenzialgetrennte Stromversorgungseinrichtung die Ausgangsspannung Ua am Ausgang A20 erzeugt. Mit Hilfe eines Auswahlsignals A an der Steuereinrichtung 30 ist es nun möglich, den Signalgeber am Ausgang A20 entweder im Tag- oder Nachtbetrieb zu betreiben, in dem die für den Tag- oder Nachtbetrieb vorgesehene Sollspannungshöhe Us1 oder Us2 als Ausgangsspannung Ua am Ausgang A20 eingestellt wird. Hierbei wird das Rückmeldesignal Sr des Spannungsbewertungsmoduls 40 ausgewertet, das über einen Optokoppler OPTO auf einen Rückmeldeeingang R30 der Steuereinrichtung 30 rückgekoppelt wird. Hinsichtlich der Arbeitsweise der Eisenbahnsignaleinrichtung sei auf die Ausführungen im Zusammenhang mit den Figuren 1-17 verwiesen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1.  Anordnung (10)

    - mit einer potenzialgetrennten Stromversorgungseinrichtung (20), die aufweist: einen Eingang (E20) zum Anlegen einer Eingangsspannung, einen vom Eingang potenzialgetrennten Ausgang (A20) zur Ausgabe einer Ausgangsspannung und einen Steueranschluss (S20), an dem ein Steuersignal (ST) zum Erhöhen oder Erniedrigen der Ausgangsspannung angelegt werden kann,

    - mit einer Steuereinrichtung (30), die an den Steueranschluss (S20) der Stromversorgungseinrichtung (20) angeschlossen ist und das Steuersignal (ST) anlegen kann, und

    - mit einem mit der Steuereinrichtung (30) in Verbindung stehenden Spannungsbewertungsmodul (40), das an den Ausgang (A20) der Stromversorgungseinrichtung (20) angeschlossen ist und an die Steuereinrichtung (30) ein Rückmeldesignal (Srk) liefert, das die Spannungshöhe der Ausgangsspannung betrifft,

    **dadurch gekennzeichnet, dass**

    - die Steuereinrichtung (30) geeignet ist, wahlweise eine von zumindest zwei unterschiedlichen Sollspannungshöhen am Ausgang (A20) der Stromversorgungseinrichtung (20) einzustellen,

    - das Spannungsbewertungsmodul (40) derart ausgestaltet ist, dass es ein Rückmeldesignal (Srk) an die Steuereinrichtung (30) zurücksendet, mit dem das Über- oder Unterschreiten jeder der zumindest zwei unterschiedlichen Sollspannungshöhen am Ausgang (A20) der Stromversorgungseinrichtung (20) jeweils durch einen Signalwechsel des Rückmeldesignals (Srk) angezeigt wird, und

    - die Steuereinrichtung (30) geeignet ist, unter Berücksichtigung der Signalwechsel des Rückmeldesignals (Srk) jedes der mindestens zwei unterschiedlichen Sollspannungshöhen am Ausgang (A20) der Stromversorgungseinrichtung (20) einzustellen.

2.  Anordnung (10) nach Anspruch 1,

**dadurch gekennzeichnet, dass**

- das Spannungsbewertungsmodul (40) eine mit der Ausgangsspannung der Stromversorgungseinrichtung (20) beaufschlagte Umschalteinrichtung (50) aufweist, deren Schaltstellung von der Höhe der Ausgangsspannung der Stromversorgungseinrichtung (20) abhängt, und
- die Umschalteinrichtung (50) zumindest einen Hilfsschwellenwertschalter (OP2) umfasst, dessen Schaltschwelle zwischen jeweils zwei benachbarten der zumindest zwei unterschiedlichen Sollspannungshöhen liegt.

3. Anordnung (10) nach Anspruch 2, **dadurch gekennzeichnet, dass**

- das Spannungsbewertungsmodul (40) einen mit der Ausgangsspannung der Stromversorgungseinrichtung (20) beaufschlagten Hauptschwellenwertschalter (60) aufweist, dessen Schaltschwelle von der Umschalteinrichtung (50) wahlweise auf eine oder eine andere der zumindest zwei unterschiedlichen Sollspannungshöhen umgeschaltet werden kann, und
- das Ausgangssignal des Hauptschwellenwertschalters (60) - unverarbeitet oder in weiterverarbeiteter Form - als binäres Rückmeldesignal (Srk) an die Steuereinrichtung (30) zurückgesendet wird.

4. Anordnung (10) nach Anspruch 2, **dadurch gekennzeichnet, dass**

- das Spannungsbewertungsmodul (40) einen analogen Verstärker (90) aufweist, der mit einer zu der Ausgangsspannung der Stromversorgungseinrichtung (20) proportionalen Spannung beaufschlagt ist und dessen Arbeitspunkt von der Umschalteinrichtung (50) wahlweise auf eine oder eine andere der zumindest zwei unterschiedlichen Sollspannungshöhen umgeschaltet werden kann, und
- das Ausgangssignal des Verstärkers (90)- unverarbeitet oder in weiterverarbeiteter Form - als analoges Rückmeldesignal (Srk) an die Steuereinrichtung (30) zurückgesendet wird.

5. Anordnung (10) nach Anspruch 2, **dadurch gekennzeichnet, dass** das Spannungsbewertungsmodul(40) einen von der Umschalteinrichtung (50) gesteuerten Multiplexer (150) aufweist, der abhängig vom Signal der Umschalteinrichtung (50) jeweils eines der eingangsseitig an ihm anliegenden Eingangssignale - unverarbeitet oder in weiterverarbeiteter Form - als Rückmeldesignal (Srk) an die Steuereinrichtung (30) zurücksendet.

6. Anordnung (10) nach Anspruch 5, **dadurch gekennzeichnet, dass**

- das Spannungsbewertungsmodul (40) zumindest zwei mit der Ausgangsspannung der Stromversorgungseinrichtung (20) beaufschlagte Hauptschwellenwertschalter (HS1 - HSn) aufweist, deren Schaltschwellen auf unterschiedlichen Sollspannungshöhen liegen, und
- der Multiplexer (150) jeweils eines der Ausgangssignale der Hauptschwellenwertschalter (HS1 - HSn)- unverarbeitet oder in weiterverarbeiteter Form - als binäres Rückmeldesignal (Srk) an die Steuereinrichtung (30) zurücksendet.

7. Anordnung (10) nach Anspruch 5, **dadurch gekennzeichnet, dass**

- das Spannungsbewertungsmodul (40) zumindest zwei analoge Verstärker (DV1 - DVn) aufweist, die jeweils mit einer zu der Ausgangsspannung der Stromversorgungseinrichtung (20) proportionalen Spannung beaufschlagt sind und deren Arbeitspunkte auf unterschiedlichen Sollspannungshöhen liegen, und
- der Multiplexer (150) jeweils eines der Ausgangssignale der Verstärker - unverarbeitet oder in weiterverarbeiteter Form - als analoges Rückmeldesignal (Srk) an die Steuereinrichtung (30) zurücksendet.

8. Anordnung (10) nach einem der voranstehenden Ansprüche, **dadurch gekennzeichnet, dass**

- das Spannungsbewertungsmodul (40) zumindest zwei mit der Ausgangsspannung der Stromversorgungseinrichtung (20) beaufschlagte Schwellenwertschalter (70, 80) aufweist, deren Schaltschwellen auf unterschiedlichen Sollspannungshöhen liegen, und
- die Ausgänge der Schwellenwertschalter (70, 80) an ein XOR-Glied (130) angeschlossen sind, und
- das Ausgangssignal des XOR-Glieds (130)- unverarbeitet oder in weiterverarbeiteter Form - als binäres Rückmeldesignal (Srk) an die Steuereinrichtung (30) zurückgesendet wird.

9. Anordnung (10) nach einem der voranstehenden Ansprüche, **dadurch gekennzeichnet, dass**

- das Spannungsbewertungsmodul (40) zumindest zwei analoge Verstärker (DV1, DV2) aufweist, die jeweils mit einer zu der Ausgangsspannung der Stromversorgungseinrichtung (20) proportionalen Spannung beaufschlagt sind und deren Arbeitspunkte auf unterschiedlichen Sollspannungshöhen liegen, und

- die Ausgänge der analogen Verstärker (DV1, DV2) derartig miteinander verknüpft sind, dass der jeweils für den nächsthöheren Arbeitspunkt eingestellte analoge Verstärker (DV1, DV2) eine gegenüber dem vorherigen analogen Verstärker (DV1, DV2) invertierte Wirkung auf das Ergebnissignal hervorbringt, und

- das Ergebnissignal - unverarbeitet oder in weiterverarbeiteter Form - als analoges Rückmeldesignal (Srk) an die Steuereinrichtung (30) zurückgesendet wird.

10. Anordnung (10) nach einem der voranstehenden Ansprüche, **dadurch gekennzeichnet, dass**

- die Steuereinrichtung (30) einen Steuereingang (E30) aufweist, der das Einspeisen eines Auswahlwahlsignals (A) zur Auswahl eines der zumindest zwei unterschiedlichen Sollspannungshöhen ermöglicht

- die Steuereinrichtung (30) zumindest ein Verzögerungsglied (301, 306) aufweist, das im Falle eines Umstellens des Auswahlsignals (A) am Steuereingang (E30) der Steuereinrichtung (30) die Steuereinrichtung (30) für eine vorgegebene Zeitspanne ($\tau$1, $\tau$2) von einem vom Rückmeldesignal (Srk) abhängigen Regelbetrieb in einen vom Rückmeldesignal (Srk) unabhängigen Steuerbetrieb umschaltet,

- wobei die Steuereinrichtung (30) im Steuerbetrieb - unabhängig vom Rückmeldesignal (Srk) - am Steueranschluss der Stromversorgungseinrichtung (20) ein Steuersignal (ST) zum Erhöhen der Ausgangsspannung anlegt, wenn das umgestellte Auswahlsignal im Vergleich zum vorherigen eine Erhöhung der Ausgangsspannung vorsieht, oder ein Steuersignal (ST) zum Erniedrigen der Ausgangsspannung anlegt, wenn das umgestellte Auswahlsignal im Vergleich zum vorherigen eine Erniedrigung der Ausgangsspannung vorsieht, und

- wobei die Steuereinrichtung (30) im Regelbetrieb das Steuersignal (ST) in Abhängigkeit vom Rückmeldesignal (Srk) erzeugt.

11. Eisenbahnsignaleinrichtung (500) mit einer Anordnung (10) nach einem der voranstehenden Ansprüche und einem optischen Signalgeber (510), der an den Ausgang (A20) der Anordnung (10) angeschlossen ist und der wahlweise in einem Tagbetrieb oder Nachtbetrieb betrieben werden kann, wobei eine der zumindest zwei unterschiedlichen Sollspannungshöhen der Anordnung (10) der Sollspannung am Signalgeber für den Tagbetrieb und eine andere der zumindest zwei unterschiedlichen Sollspannungshöhen der Anordnung (10) der Sollspannung am Signalgeber für den Nachtbetrieb entspricht.

12. Verfahren zum Erzeugen einer Ausgangsspannung an einem Ausgang (A20) einer potenzialgetrennten Stromversorgungseinrichtung (20), wobei

- an einem Eingang (E20) der Stromversorgungseinrichtung (20) eine Eingangsspannung angelegt wird und

- an einem Steueranschluss (S20) der Stromversorgungseinrichtung (20) mit einer Steuereinrichtung (30) ein Steuersignal (ST) zum Erhöhen oder Erniedrigen der Ausgangsspannung der Stromversorgungseinrichtung (20) angelegt wird,

**dadurch gekennzeichnet, dass**

- wahlweise eine von zumindest zwei unterschiedlichen Sollspannungshöhen am Ausgang der Stromversorgungseinrichtung (20) eingestellt wird,

- wobei ein Rückmeldesignal (Srk) erzeugt und an die Steuereinrichtung (30) zurückgesendet wird, mit dem das Über- oder Unterschreiten der zumindest zwei unterschiedlichen Sollspannungshöhen am Ausgang (A20) der Stromversorgungseinrichtung (20) jeweils durch einen Signalwechsel des Rückmeldesignals (Srk) angezeigt wird, und

- wobei die Signalwechsel des Rückmeldesignals (Srk) zum Einstellen der Ausgangsspannung der Stromversorgungseinrichtung (20) herangezogen werden.

## Claims

1. Arrangement (10)

- having an isolated power supply facility (20) comprising: an input (E20) for applying an input voltage, an output (A20) isolated from the input for outputting an output voltage and a control terminal (S20), to which a control signal (ST) can be applied for increasing or decreasing the output voltage,

- having a control facility (30) which is connected to the control terminal (S20) of the power supply facility (20) and can apply the control signal (ST), and

- having a voltage evaluation module (40) connected to the control facility (30), said voltage evaluation module being connected to the output (A20) of the power supply facility (20) and supplying a feedback signal (Srk) to the control facility (30), said feedback signal relating to the voltage level of the output voltage,

**characterised in that**

- the control facility (30) is suited to optionally adjusting one of at least two different target voltage levels at the output (A20) of the power supply facility (20),

- the voltage evaluation module (40) is embodied such that it sends a feedback signal (Srk) back to the control facility (30), with which the exceeding of or failure to reach each of the at least two different target voltage levels at the output (A20) of the power supply facility (20) is indicated in each case by a signal changeover of the feedback signal (Srk), and

- the control device (30) is suited to adjusting each of the at least two different target voltage levels at the output (A20) of the power supply facility (20) by taking the signal changeover of the feedback signal (Srk) into account.

2. Arrangement (10) according to claim 1, **characterised in that**

- the voltage evaluation module (40) has a switchover facility (50) supplied with the output voltage of the power supply facility (20), the switching position of which depends on the level of the output voltage of the power supply facility (20), and

- the switchover facility (50) includes at least one auxiliary threshold switch (OP2), the switching threshold of which lies in each case between two adjacent target voltage levels of the at least two different target voltage levels.

3. Arrangement (10) according to claim 2, **characterised in that**

- the voltage evaluation module (40) has a main threshold value switch (60) supplied with the output voltage of the power supply facility (20), the switching threshold of which can optionally be switched by the switchover facility (50) to one or another of the at least two different target voltage levels and

- the output signal of the main threshold value switch (60), unprocessed or in further processed form, is sent back to the control facility (30) as a binary feedback signal (Srk).

4. Arrangement (10) according to claim 2, **characterised in that**

- the voltage evaluation module (40) has an analogue amplifier (90), which is supplied with a voltage which is proportional to the output voltage of the power supply facility (20) and the working point of which can optionally be switched by the switchover facility (50) to one or another of the at least two different target voltage levels, and

- the output signal of the amplifier (90), unprocessed or in further processed form, is sent back to the control facility (30) as an analogue feedback signal (Srk).

5. Arrangement (10) according to claim 2, **characterised in that**
the voltage evaluation module (40) has a multiplexer (150) controlled by the switchover facility (50), which, as a function of the signal of the switchover facility (50) sends back one of the input signals resting thereupon on the input side respectively, unprocessed or in further processed form, as a feedback signal (Srk) to the control facility (30).

6. Arrangement (10) according to claim 5, **characterised in that**

- the voltage evaluation module (40) has at least two main threshold value switches (HS1-HSn) supplied with the output voltage of the power supply facility (20), the switchover thresholds of which lie at different target voltage levels, and

- the multiplexer (150) sends back one of the output signals of the main threshold value switches (HS1-Hsn), unprocessed or in further processed form, in each case as a binary feedback signal (Srk) to the control facility (30).

7. Arrangement (10) according to claim 5, **characterised in that**

- the voltage evaluation module (40) has at least two analogue amplifiers (DV1-DVn) which are supplied in each instance with a voltage which is proportional to the output voltage of the power supply facility (20) and the working points of which lie at different target voltage levels, and

- the multiplexer (150) sends back one of the output signals of the amplifier, unprocessed or in further processed form, in each case as an analogue feedback signal (Srk) to the control facility (30).

8. Arrangement (10) according to one of the preceding claims, **characterised in that**

- the voltage evaluation module (40) has at least two threshold value switches (70, 80) supplied with the output voltage of the power supply facility (20), the switching thresholds of which lie at different target voltage levels, and

- the outputs of the threshold value switches (70, 80) are connected to an XOR-element (130), and

- the output signal of the XOR element (130), unprocessed or in further processed form, is sent back to the control facility (30) as a binary feedback signal (Srk).

9. Arrangement (10) according to one of the preceding claims, **characterised in that**

- the voltage evaluation module (40) has at least two analogue amplifiers (DV1, DV2), which are each supplied with a voltage which is proportional to the output voltage of the power supply facility (20) and the working points of which lie at different target voltage levels, and
- the outputs of the analogue amplifiers (DV1, DV2) are linked to one another such that the analogue amplifier (DV1, DV2) set in each case for the next highest working point produces an effect on the result signal which is inverted by comparison with the previous analogue amplifier (DV1, DV2), and
- the result signal, unprocessed or in further processed form, is sent back to the control facility (30) as an analogue feedback signal (Srk).

10. Arrangement (10) according to one of the preceding claims, **characterised in that**

- the control facility (30) has a control input (E30), which enables the feeding-in of a selection signal (A) in order to select one of the at least two different target voltage levels,
- the control facility (30) has at least one delay element (301, 306), which, in the event of a conversion of the selection signal (A) at the control input (E30) of the control facility (30), switches the control facility (30) from a control operation dependent on the feedback signal (Srk) into a control operation independent of the feedback signal (Srk) for a predetermined period of time (T1, T2),
- wherein the control facility (30) during control operation, independently of the feedback signal (Srk), at the control terminal of the power supply facility (20) applies a control signal (ST) in order to increase the output voltage, if the adjusted selection signal provides for an increase in the output voltage by comparison with the previous, or applies a control signal (ST) to lower the output signal if the converted selection signal provides for a decrease in the output voltage by comparison with the previous, and
- wherein the control facility (30) generates the control signal (ST) during control operation as a function of the feedback signal (Srk).

11. Railway signal facility (500) having an arrangement (10) according to one of the preceding claims and an optical signal sensor (510) which is connected to the output (A20) of the arrangement (10) and which can optionally be operated in a day operation or a night operation, wherein one of the at least two different target voltage levels of the arrangement (10) of the target voltage on the signal sensor corresponds to the day operation and another of the at least two different target voltage levels of the arrangement (10) of the target voltage on the signal sensor corresponds to the night operation.

12. Method for generating an output voltage at an output (A20) of an isolated power supply facility (20), wherein

- an input voltage is applied to an input (E20) of the power supply facility (20) and
- a control signal (ST) for increasing or decreasing the output voltage of the power supply facility (20) is applied to a control terminal (S20) of the power supply facility (2) with a control facility (30),
**characterised in that**
- one of at least two different target voltage levels is optionally adjusted at the output of the power supply facility (20),
- wherein a feedback signal (Srk) is generated and sent back to the control facility (30), with which the exceeding of or failure to reach the at least two different target voltage levels at the output (A20) of the power supply facility (20) is indicated in each case by a signal changeover of the feedback signal (Srk), and
- wherein the signal replacement of the feedback signal (Srk) is used to adjust the output voltage of the power supply facility (20),

**Revendications**

1. Montage (10)

- comprenant un dispositif ( 20 ) d'alimentation en courant à séparation de potentiel qui a : une entrée ( E20 ) d'application d'une tension d'entrée, une sortie ( A20 ) séparée en potentiel de l'entrée, pour la sortie d'une tension de sortie et une borne ( S20 ) de commande à laquelle un signal ( ST ) de commande peut être appliqué pour élever ou abaisser la tension de sortie.
- comprenant un dispositif ( 30 ) de commande, qui est relié à la borne ( S20 ) de commande du dispositif ( 20 ) d'alimentation en courant et qui peut appliquer le signal ( ST ) de commande et
- comprenant un module ( 40 ) d'évaluation de la tension, qui est en liaison avec le dispositif ( 30 ) de commande, qui est relié à la sortie ( A20 ) du dispositif ( 20 ) d'alimentation en courant et qui fournit au dispositif ( 30 ) de commande un signal ( srk ) d'accusé de réception, qui concerne le niveau de la tension de sortie.

**caractérisé en ce que**

- le dispositif ( 30 ) de commande est propre à établir au choix l'un d'au moins deux niveaux de tension de consigne différents à la sortie ( A20 ) du dispositif ( 20 ) d'alimentation en courant,

- le module ( 40 ) d'évaluation de la tension est conformé pour renvoyer un signal ( srk ) d'accusé de réception au dispositif ( 30 ) de commande par lequel il est indiqué, par un changement un signal ( srk ) d'accusé de réception, le dépassement par le haut ou par le bas de chacun des au moins deux niveaux de tension de consigne différents à la sortie ( A20 ) du dispositif ( 20 ) d'alimentation en courant et

- le dispositif ( 30 ) de commande est propre à établir, en tenant compte du changement du signal ( srk ) d'accusé de réception, chacun des au moins deux niveaux de tension de consigne différents à la sortie ( A20 ) du dispositif ( 20 ) d'alimentation en courant.

2. Montage ( 10 ) suivant la revendication 1, **caractérisé en ce que**

- le module ( 40 ) d'évaluation de la tension a un dispositif ( 50 ) de commutation, qui est alimenté par la tension de sortie du dispositif ( 20 ) d'alimentation en courant et dont la position de commutation dépend du niveau de la tension de sortie du dispositif ( 20 ) d'alimentation en courant et

- le dispositif ( 50 ) de commutation comprend au moins un commutateur ( OP2 ) de valeur de seuil auxiliaire, dont le seuil de commutation se trouve respectivement entre deux niveaux voisins des au moins deux niveaux de tension de consigne différents.

3. Montage ( 10 ) suivant la revendication 2, **caractérisé en ce que**

- le module ( 40 ) d'évaluation de la tension a un commutateur ( 60 ) de valeur de seuil principal, auquel est appliquée la tension de sortie du dispositif ( 20 ) d'alimentation en courant en dont le seuil de commutation peut être commuté par le dispositif ( 50 ) de commutation au choix sur l'un ou sur un autre des au moins deux niveaux de tension de consigne différents et

- le signal de sortie du commutateur ( 60 ) de valeur de seuil principal est renvoyé, sans traitement ou sous une forme retraitée en tant que signal ( srk ) binaire d'accusé de réception au dispositif ( 30 ) de commande.

4. Montage ( 10 ) suivant la revendication 2, **caractérisé en ce que**

- le module ( 40 ) d'évaluation de la tension a un amplificateur ( 90 ) analogique, auquel est appliquée une tension proportionnelle à la tension de sortie du dispositif ( 20 ) d'alimentation en courant et dont le point de travail peut être commuté par le dispositif ( 50 ) de commutation au choix sur l'un ou sur un autre des au moins deux niveaux de tension de consigne différents et

- le signal de sortie de l'amplificateur ( 90 ) est renvoyé, sans traitement ou sous une forme retraitée, en tant que signal ( srk ) analogique d'accusé de réception au dispositif ( 30 ) de commande.

5. Montage ( 10 ) suivant la revendication 2, **caractérisé en ce que**

- le module ( 40 ) d'évaluation de la tension a un multiplexeur ( 150 ) qui est commandé par le dispositif ( 50 ) de commutation et qui renvoie, en fonction du signal du dispositif ( 50 ) de commutation, respectivement l'un des signaux d'entrée qui lui sont appliqués du côté de l'entrée, sans traitement ou sous une forme retraitée, comme signal ( srk ) d'accusé de réception au dispositif ( 30 ) de commande.

6. Montage ( 10 ) suivant la revendication 5, **caractérisé en ce que**

- le module ( 40 ) d'évaluation de la tension a au moins deux commutateurs ( HS1 ) à ( HSn ) de valeur de seuil principaux, auxquels s'applique la tension de sortie du dispositif ( 20 ) d'alimentation en courant et dont les valeurs de seuil sont à des niveaux de tension de consigne différents et

- le multiplexeur ( 150 ) renvoie respectivement l'un des signaux de sortie des commutateurs ( HS1 ) à ( HSn ) de valeur de seuil principaux sans traitement ou sous une forme retraitée, en tant que signal ( srk ) binaire d'accusé de réception au dispositif ( 30 ) de commande.

7. Montage ( 10 ) suivant la revendication 5, **caractérisé en ce que**

- le module ( 40 ) d'évaluation de la tension a au moins deux amplificateurs ( DV1 à DVn ) analogiques, auxquels sont appliqués recpectivement une tension proportionnelle à la tension de sortie du dispositif ( 20 ) d'alimentation en courant et dont les points de travail sont à des niveaux de tension de consigne différents et

- le multiplexeur ( 150 ) renvoie respectivement l'un des signaux de sortie des amplificateurs, sans traitement ou sous une forme retraitée, en tant que signal ( srk ) analogique d'accusé de réception au dispositif ( 30 ) de commande.

**8.** Montage ( 10 ) suivant l'une des revendications précédentes,
**caractérisé en ce que**

- le module ( 40 ) d'évaluation de la tension a au moins deux commutateurs ( 70, 80 ) de valeur de seuil, auxquels est appliqué la tension de sortie du dispositif ( 20 ) d'alimentation en courant et dont les seuils de commutation sont à des niveaux de tension de consigne différents et
- les sorties des commutateurs ( 70, 80 ) de valeur de seuil sont reliés à un élément ( 130 ) OU exclusif et
- le signal de sortie de l'élément ( 130 ) OU exclusif est renvoyé, sans traitement ou sous une forme retraitée, en tant que signal ( srk ) binaire d'accusé de réception au dispositif ( 30 ) de commande.

**9.** Montage ( 10 ) suivant l'une des revendications précédentes,
**caractérisé en ce que**

- le module ( 40 ) d'évaluation de la tension a au moins deux amplificateurs ( DV1, DV2 ) analogiques, auxquels sont appliqués respectivement une tension proportionnelle à la tension de sortie du dispositif ( 20 ) d'alimentation en courant et dont les points de travail sont à des niveaux de tension de consigne différents et
- les sorties des amplificateurs ( DV1, DV2 ) analogiques sont combinées entre elles de manière à ce que l'amplificateur ( DV1, DV2 ) analogique réglé pour le point de travail immédiatement le plus haut provoque sur le signal résultant un effet d'inversion par rapport à l'amplificateur ( DV1, DV2 ) analogique précédent et
- le signal résultant est renvoyé, sans traitement ou sous une forme retraitée, en tant que signal ( srk ) analogique d'accusé de réception au dispositif ( 30 ) de commande.

**10.** Montage ( 10 ) suivant l'une des revendications précédentes,
**caractérisé en ce que**

- le dispositif ( 30 ) de commande a une entrée ( E30 ) de commande, qui permet l'injection d'un signal ( A ) de sélection de l'un des au moins deux niveaux de tension de consigne différents,
- le dispositif ( 30 ) de commande a au moins un élément ( 301, 306 ) de temporisation qui, dans le cas d'un changement du signal ( A ) de sélection à l'entrée ( E30 ) de commande du dispositif ( 30 ) de commande, commute le dispositif ( 30 ) de commande pendant un laps de temps ( t1, t2 ) donné à l'avance d'un fonctionnement de régulation, qui dépend du signal ( srk ) d'accusé de réception, à un fonctionnement de commande indépendant du signal ( srk ) d'accusé de réception.

- dans lequel le dispositif ( 30 ) de commande applique en fonctionnement de commande -indépendamment du signal ( srk ) d'accusé de réception- à la borne de commande du dispositif ( 20 ) d'alimentation en courant un signal ( ST ) de commande pour élever la tension de sortie, si le signal de sélection modifié par rapport au précédent prévoit une élévation de la tension de sortie ou applique un signal ( ST ) de commande pour abaisser la tension de sortie, si le signal de sélection modifié par rapport au précédent prévoit un abaissement de la tension de sortie et
- dans lequel le dispositif ( 30 ) de commande produit en fonctionnement de régulation le signal ( ST ) de commande en fonction du signal ( srk ) d'accusé de réception.

**11.** Dispositif ( 500 ) de signalisation d'une voie de chemin de fer, comprenant un montage ( 10 ) suivant l'une des revendications précédentes et un indicateur ( 510 ) de signal optique, qui est relié à la sortie ( A20 ) du montage ( 10 ) et qui peut fonctionner au choix suivant un fonctionnement de jour ou suivant un fonctionnement de nuit, dans lequel l'un des au moins deux niveaux de tension de consigne différents du montage ( 10 ) correspond à la tension de consigne à l'indicateur de signal pour le fonctionnement de jour et un autre des au moins deux niveaux de tension de consigne différents du montage ( 10 ) correspond à la tension de consigne à l'indicateur de signal pour le fonctionnement de nuit.

**12.** Procédé de production d'une tension de sortie à une sortie d'un dispositif ( 20 ) d'alimentation en courant à séparation de potentiel, dans lequel

- on applique une tension d'entrée à une entrée ( E20 ) du dispositif ( 20 ) d'alimentation en courant et
- on applique à une borne ( S20 ) de commande du dispositif ( 20 ) d'alimentation en courant, par un dispositif ( 30 ) de commande, un signal ( ST ) de commande pour élever ou pour abaisser la tension de sortie du dispositif ( 20 ) d'alimentation en courant **caractérisé en ce que**
- on règle au choix l'un d'au moins deux niveaux de tension de consigne différents à la sortie du dispositif ( 20 ) d'alimentation en courant,
- dans lequel on produit un signal ( srk ) d'accusé de réception et on le renvoie au dispositif ( 30 ) de commande, signal par lequel on indique, par un changement du signal ( srk ) d'accusé de réception, le dépassement par le haut ou par le bas des au moins deux niveaux de tension de consigne différents à la sortie ( A20 ) du dispositif ( 20 ) d'alimentation en courant respectivement, et

- dans lequel on tire parti du changement du signal ( srk ) d'accusé de réception pour régler la tension de sortie du dispositif ( 20 ) d'alimentation en courant.

FIG 1

EP 2 732 541 B1

FIG 2

FIG 3

FIG 4

FIG 5

EP 2 732 541 B1

FIG 6

FIG 7

FIG 8

EP 2 732 541 B1

FIG 9

Srk

U2

U1

NSF

NSF

5    10  12,5  15    Ua [V]

FIG 11

Srk

U2

U1

NSF    PSF

5         10        15    Ua [V]

FIG 10

EP 2 732 541 B1

FIG 12

FIG 13

EP 2 732 541 B1

## FIG 14

## FIG 16

FIG 15

EP 2 732 541 B1

FIG 17

FIG 18

EP 2 732 541 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3501052 A1